(19) Europäisches Patentamt European Patent Office Office européen des brevets

(11) **EP 4 742 116 A1**

(12) **EUROPEAN PATENT APPLICATION**
published in accordance with Art. 153(4) EPC

(43) Date of publication:
**13.05.2026 Bulletin 2026/20**

(21) Application number: **23944283.3**

(22) Date of filing: **03.07.2023**

(51) International Patent Classification (IPC):
**G06N 10/70** $^{(2022.01)}$

(52) Cooperative Patent Classification (CPC):
**G06N 10/70**

(86) International application number:
**PCT/JP2023/024673**

(87) International publication number:
**WO 2025/009031 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **ISHII, Masatoshi**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **QUANTUM COMPUTING PROGRAM, QUANTUM COMPUTING METHOD, AND INFORMATION PROCESSING DEVICE**

(57)     To reduce errors caused by various types of noise.

An information processing apparatus (10) obtains a plurality of equivalent circuits (2a, 2b, and so on), which is equivalent to a two-qubit gate (1a to 1f) included in a first quantum circuit (1) and is generated using respective ones of a plurality of MS gates (3a, 3b, and so on) whose parameter values differ. The information processing apparatus (10) generates a plurality of second quantum circuits (4a, 4b, and so on) by converting the two-qubit gate (1a to 1f) included in the first quantum circuit (1) into each of the equivalent circuits (2a, 2b, and so on). The information processing apparatus (10) causes a quantum computer to execute quantum computations respectively in accordance with the generated second quantum circuits (4a, 4b, and so on). Then, the information processing apparatus (10) outputs, as a computation result of the first quantum circuit (1), a value obtained by averaging results of the quantum computations executed respectively in accordance with the second quantum circuits (4a, 4b, and so on).

FIG. 1

## Description

Technical Field

The present disclosure relates to a quantum computation program, a quantum computation method, and an information processing apparatus.

Background Art

Currently, available quantum computers are of the type referred to as Noisy Intermediate-Scale Quantum Computers (NISQ), which use superconducting quantum bits (qubits) or ion-trap qubits. In these quantum devices, the error rate is approximately 1%, and the number of qubits is about 10 to 1000. Such small-scale quantum computers are incapable of completely correcting errors. Therefore, when executing quantum computation on a quantum computer, it is important to perform the quantum computation with a quantum circuit that reduces errors as much as possible.

In addition, quantum computers are equipped with one-qubit gates and two-qubit gates as quantum gates for operating qubits. These quantum gates are referred to as native gates. Which two-qubit gate is supported as a native gate depends on the type of quantum device adopted in the quantum computer.

On the other hand, a quantum circuit constructed for solving a target problem may include quantum gates other than native gates. In such cases, quantum gates other than native gates are converted into equivalent circuits composed of native gates, and are then implemented in a qubit control apparatus that performs gate operations on qubits. For example, a three-qubit gate such as a CCX (Toffoli) gate is implemented using a plurality of two-qubit gates. A CnX gate or a CnZ gate (where n is an integer of 3 or more) having three or more control bits is converted into a plurality of CCX gates and then further converted into native gates.

In current NISQ devices, the noise of two-qubit gates is about an order of magnitude greater than that of one-qubit gates. Accordingly, two-qubit gates have a greater impact on the accuracy of quantum computation compared with one-qubit gates. A typical example of such noise is over-rotation noise, which is referred to as coherent noise.

Regarding coherent noise, it has been proposed to use randomized compiling (RC) to reduce unpredictable errors attributable to coherent noise. RC converts coherent errors into stochastic noise, substantially reduces unpredictable errors in quantum algorithms, and enables accurate prediction of algorithm performance from error rates measured by cycle benchmarking.

Citation List

Non-Patent Literature

NPTL1: Akel Hashim, Ravi K. Naik, Alexis Morvan, Jean-Loup Ville, Bradley Mitchell, John Mark Kreikebaum, Marc Davis, Ethan Smith, Costin Iancu, Kevin P. O'Brien, Ian Hincks, Joel J. Wallman, Joseph Emerson, Irfan Siddiqi, "Randomized compiling for scalable quantum computing on a noisy superconducting quantum processor", ar-Xiv:2010.00215v2, 12 May 2021

Summary of Invention

Technical Problem

RC is effective for reducing errors arising from over-rotation noise (quantum error mitigation); however, RC is not effective for other types of noise. In practical quantum computation performed by a quantum computer, various types of noise occur. Accordingly, there is a need for a quantum error mitigation technique that reduces errors even in practical quantum computation in which various types of noise are present.

In one aspect, the present disclosure is directed to reducing errors attributable to various types of noise.

Solution to Problem

In one aspect, a quantum computation program is provided that causes a computer to execute the following processing.

The computer obtains a plurality of equivalent circuits, the plurality of equivalent circuits being equivalent to a two-qubit gate included in a first quantum circuit and being generated using respective ones of a plurality of Mølmer-Sørenson (MS) gates whose parameter values differ. The computer generates a plurality of second quantum circuits by converting the two-qubit gate included in the first quantum circuit into each of the plurality of equivalent circuits. The computer causes a quantum computer to execute quantum computations respectively in accordance with the plurality of second quantum circuits generated. The computer outputs, as a computation result of the first quantum circuit, a value obtained by averaging results of the quantum computations executed by the quantum computer in accordance with the plurality of second quantum circuits.

Advantageous Effects of Invention

In one aspect, errors attributable to various types of noise are reduced.

The above and other objects, features, and advantages of the present invention will become apparent from the following description, taken in conjunction with the accompanying drawings, which illustrate preferred embodiments of the present invention by way of example.

Brief Description of Drawings

FIG. 1 illustrates an example of a quantum computation method according to a first embodiment.
FIG. 2 illustrates an example of a configuration of a quantum computation system.
FIG. 3 illustrates an example of a hardware configuration of a quantum computer device.
FIG. 4 illustrates an example of a hardware configuration of a classical computer device.
FIG. 5 illustrates an example of a quantum circuit generated by RC.
FIG. 6 illustrates an example of an equivalent circuit of a Toffoli gate.
FIG. 7 illustrates an example of errors that arise with the Toffoli gate.
FIG. 8 illustrates an example of an error-mitigation effect of RC in a case where only over-rotation noise is present.
FIG. 9 illustrates an example of an error-mitigation effect of RC in a case where over-rotation noise and stochastic Pauli noise are present.
FIG. 10 illustrates an example of functions included in the classical computer device.
FIG. 11 illustrates an example of a method for determining parameters of an MS gate.
FIG. 12 illustrates a first example of an equivalent circuit of a CNOT gate.
FIG. 13 illustrates a second example of an equivalent circuit of the CNOT gate.
FIG. 14 illustrates a third example of an equivalent circuit of the CNOT gate.
FIG. 15 illustrates a fourth example of an equivalent circuit of the CNOT gate.
FIG. 16 illustrates a fifth example of an equivalent circuit of the CNOT gate.
FIG. 17 illustrates a sixth example of an equivalent circuit of the CNOT gate.
FIG. 18 illustrates a seventh example of an equivalent circuit of the CNOT gate.
FIG. 19 illustrates an eighth example of an equivalent circuit of the CNOT gate.
FIG. 20 illustrates an example of an equivalent circuit of a Toffoli gate.
FIG. 21 is a flowchart illustrating an example of a procedure for quantum computation.
FIG. 22 illustrates an example of a procedure for generating a plurality of quantum circuits using MS gates of different types.
FIG. 23 illustrates an example of an error distribution of a Toffoli gate when implemented with different types of MS gates.
FIG. 24 illustrates an example of errors of output states for individual quantum circuits and errors of output states averaged over a plurality of quantum circuits.
FIG. 25 illustrates a first example of an equivalent circuit of the CNOT gate in which angles "$\varphi_0$ and $\varphi_1$" are randomly determined.
FIG. 26 illustrates a second example of an equivalent circuit of the CNOT gate in which the angles "$\varphi_0$ and $\varphi_1$" are randomly determined.
FIG. 27 is a flowchart illustrating one example of a procedure for generating a plurality of quantum circuits using MS gates with random angles.
FIG. 28 illustrates an example of errors in output states of individual quantum circuits and errors in output states averaged over a plurality of quantum circuits.

Description of Embodiments

The embodiments below are described with reference to the drawings. The embodiments may be implemented in combination insofar as no inconsistencies arise.

[First Embodiment]

A first embodiment is a quantum computation method that is able to reduce errors attributable to various types of noise. Reducing these errors prevents the error from taking on its worst-case value, thereby enabling quantum computation at the intended accuracy.

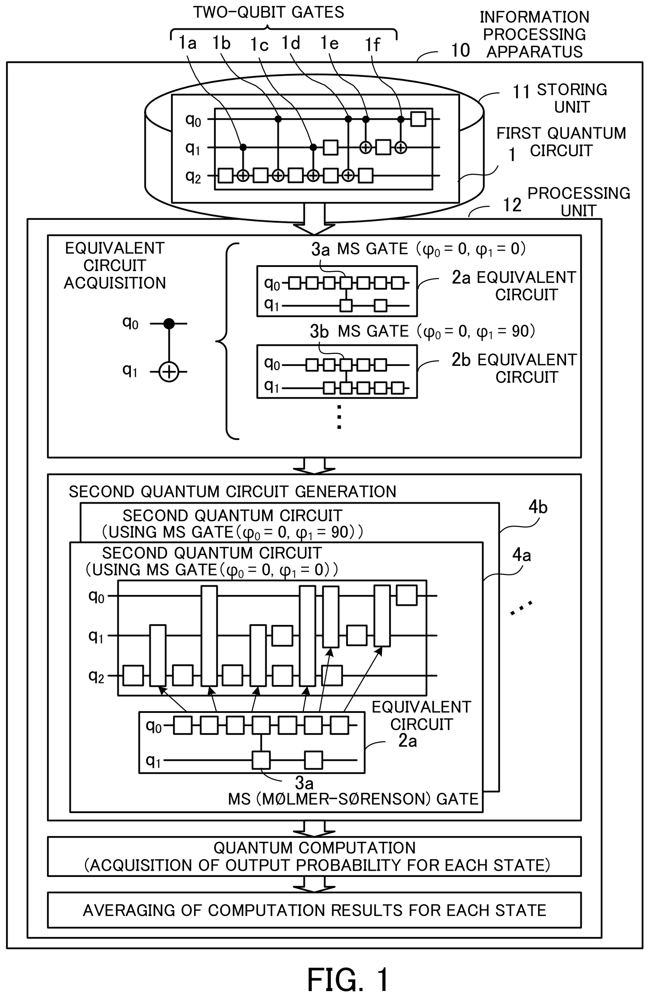

FIG. 1 illustrates an example of the quantum computation method according to the first embodiment. In FIG. 1, an information processing apparatus 10 that executes the quantum computation method is illustrated. The information processing apparatus 10, for example, by executing a quantum computation program, implements the quantum computation method.

The information processing apparatus 10 includes a storing unit 11 and a processing unit 12. The storing unit 11 is, for example, a memory or a storage device provided in the information processing apparatus 10. The processing unit 12 is, for example, a processor or an arithmetic circuit provided in the information processing apparatus 10.

The storing unit 11 stores a first quantum circuit 1. The first quantum circuit 1 includes, for example, one-qubit gates and two-qubit gates. A quantum circuit generated for a problem to be solved may include quantum gates that operate on three or more qubits. In such a case, the processing unit 12 of the information processing apparatus 10 generates the first quantum circuit 1 by converting quantum gates that operate on three or more qubits into equivalent circuits composed of a combination of one-qubit gates and two-qubit gates.

The processing unit 12 performs quantum computation based on the first quantum circuit 1. At that time, in order to suppress the occurrence of unpredictable errors attributable to noise, the processing unit 12 performs the quantum computation according to the following procedure.

First, the processing unit 12 obtains a plurality of equivalent circuits 2a, 2b, and so on that are equivalent to the two-qubit gates 1a to 1f included in the first quantum circuit 1 (the two-qubit gates 1a to 1f are quantum gates of the same type). The two-qubit gates 1a to 1f are, for example, CNOT (Controlled-NOT) gates. The plurality of equivalent circuits 2a, 2b, and so on is generated as quantum circuits using respective MS gates 3a, 3b, and so on, whose applied parameter values differ.

An MS gate is one type of entangling gate that entangles a plurality of qubits. The MS gate is, for example, a native gate in a quantum computer employing an ion-trap quantum device. During a gate operation of the MS gate, values of two parameters regarding a rotation angle, "$\varphi_0$, $\varphi_1$", are specified.

The plurality of equivalent circuits 2a, 2b, and so on may be generated in advance and stored in the storing unit 11. In that case, the processing unit 12 obtains the plurality of equivalent circuits 2a, 2b, and so on by reading them from the storing unit 11. Alternatively, when the first quantum circuit 1 is designated as a computation target, the processing unit 12 may generate the plurality of equivalent circuits 2a, 2b, and so on.

In the MS gate 3a used for the equivalent circuit 2a, the value of the first parameter "$\varphi_0$" is "0", and the value of the second parameter "$\varphi_1$" is also "0". In the MS gate 3b used for the equivalent circuit 2b, the value of the first parameter "$\varphi_0$" is "0", and the value of the second parameter "$\varphi_1$" is "90". In this manner, in each of the MS gates 3a, 3b, and so on, at least one of the values of the two parameters differs from that of the other MS gates.

Next, for each of the generated equivalent circuits 2a, 2b, and so on, the processing unit 12 generates respective second quantum circuit 4a, 4b, and so on in which the two-qubit gates 1a to 1f included in the first quantum circuit 1 are converted into that equivalent circuit. For example, when a plurality of two-qubit gates 1a to 1f of the same type is included in the first quantum circuit 1, the processing unit 12 converts each of the plurality of two-qubit gates 1a to 1f into one of the equivalent circuits and generates one second quantum circuit. For example, the second quantum circuit 4a is obtained by converting the two-qubit gates 1a to 1f in the first quantum circuit 1 into the equivalent circuit 2a that uses the MS gate 3a.

For each of the generated second quantum circuits 4a, 4b, and so on, the processing unit 12 executes quantum computation in accordance with the corresponding second quantum circuit 4a, 4b, and so on. For example, the processing unit 12 instructs a quantum computer to execute quantum computation in accordance with the respective second quantum circuits 4a, 4b, and so on and acquires computation results from the quantum computer. Each computation result is a probability distribution over the quantum states (bit strings) of the plurality of qubits.

The processing unit 12 outputs, as a computation result of the first quantum circuit 1, a value obtained by averaging the respective results of the quantum computations performed in accordance with the generated second quantum circuits 4a, 4b, and so on. For example, the processing unit 12 outputs an average value of the occurrence probabilities computed for each state of a plurality of qubits.

As described above, by using MS gates, the processing unit 12 generates, merely by changing applied parameters, the plurality of equivalent circuits 2a, 2b, and so on each equivalent to the two-qubit gates 1a to 1f, which are of a single type. The second quantum circuits 4a, 4b, and so on generated by converting the two-qubit gates 1a to 1f in the first quantum circuit 1 using the respective equivalent circuits 2a, 2b, and so on have mutually different error-occurrence situations. Accordingly, by averaging the results of the quantum computations performed using the respective second quantum circuits 4a, 4b, and so on, the processing unit 12 obtains computation results corresponding to an average error situation.

Consequently, errors attributable to various types of noise are reduced. That is, a generic quantum error-mitigation technique applicable also to noise other than over-rotation noise is realized. By reducing the errors that occur, occurrence of excessively large, unpredictable errors is suppressed, thereby enabling quantum computation at the intended accuracy.

When generating the plurality of equivalent circuits 2a, 2b, and so on, the processing unit 12, for example, determines a plurality of candidate values for each of the parameters "$\varphi_0$" and "$\varphi_1$" that are boundary angles obtained by dividing 360° ($2\pi$) into n (where n is an integer of 2 or greater). For example, when n = 4, four angles at intervals of 90° (= 360°/n), namely "0°, 90°, 180, 270", are the candidate values. Next, from the plurality of candidate values, the processing unit 12 selects two values, allowing duplication, and designates two or more of the candidate-value sequences thereby generated as target candidate-value sequences. Then, for each target candidate-value sequence, the processing unit 12 generates the equivalent circuits 2a, 2b, and so on using an MS gate in which a first candidate value indicated by the target candidate-value sequence is set as the value of the first parameter "$\varphi_0$" and a second candidate value is set as the value of the second parameter "$\varphi_1$".

For example, if a value of n has been determined in advance, the processing unit 12 may generate the target candidate-value sequences in advance and further generate, in advance, the plurality of equivalent circuits 2a, 2b, and so on corresponding to the type of the two-qubit gates 1a to 1f (a CNOT gate in the example of FIG. 1). In that case, for example, the processing unit 12 stores the plurality of pre-generated equivalent circuits 2a, 2b, and so on in the storing unit 11.

In an MS gate, a gate operation is specified by a sum of the value of the first parameter and the value of the second parameter, and by a difference obtained by subtracting the value of the second parameter from the value of the first parameter. Here, the first candidate value of a candidate-value sequence is taken as the value of the first parameter, and the second candidate value is taken as the value of the second parameter. In this case, among the candidate-value sequences obtainable by such selection, the processing unit 12 treats, as a target candidate-value sequence, one of the two sequences for which the angle obtained by adding the second candidate value to the first and the angle obtained by subtracting the second candidate value from the first are both the same between the two sequences. This suppresses generation of duplicate second quantum circuits that would result in the same gate operation.

Alternatively, the processing unit 12 may randomly generate angles within a range from "0°" to "360°", and use the randomly generated angles as parameter values applied to MS gates. In this case, the processing unit 12 generates the plurality of equivalent circuits 2a, 2b, and so on using MS gates in which the randomly generated angles are set as parameters. In this manner, by using random angles as parameter values of the MS gate, error-occurrence situations in the computation results of the respective second quantum circuits 4a, 4b, and so on that are generated also become random. By averaging the computation results of the respective second quantum circuits 4a, 4b, and so on, the processing unit 12 reduces errors attributable to various types of noise.

[Second Embodiment]

A second embodiment is a quantum computation system that reduces errors even when noise other than over-rotation noise, such as stochastic Pauli noise, occurs.

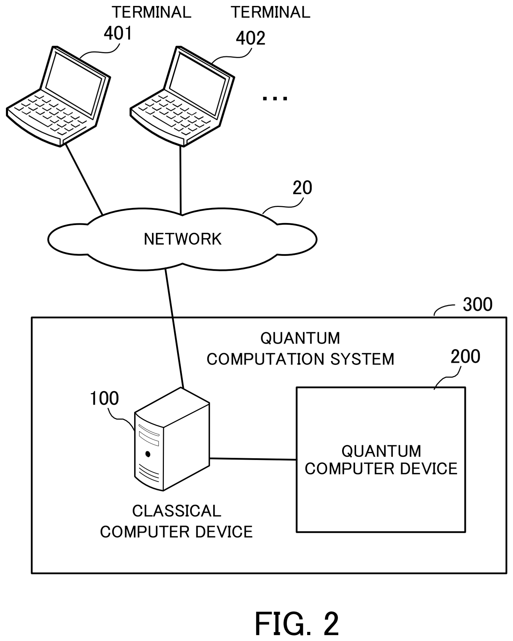

FIG. 2 illustrates an example of a configuration of the quantum computation system. A quantum computation system 300 is, for example, a computer system that employs an ion-trap quantum device. The quantum computation system 300 includes a classical computer device 100 and a quantum computer device 200. Terminals 401, 402, and so on are connected to the classical computer device 100 via a network 20. The terminals 401, 402, and so on are computers used by users who request quantum computation by the quantum computation system 300. The classical computer device 100 receives quantum circuits from the terminals 401, 402, and so on. A quantum circuit indicates an order of operations on qubits by an arrangement of elements such as gates. A qubit is a bit that represents a superposition of the "0" state and the "1" state.

The classical computer device 100, in accordance with the quantum circuits received from the terminals 401, 402, and so on, issues instructions to the quantum computer device 200 for controlling qubits. The classical computer device 100 also acquires measurement results of respective qubits from the quantum computer device 200.

The quantum computer device 200 includes a plurality of qubits and devices for operating respective ones of the plurality of qubits. The plurality of qubits provided in the quantum computer device 200 is, for example, of an ion-trap type.

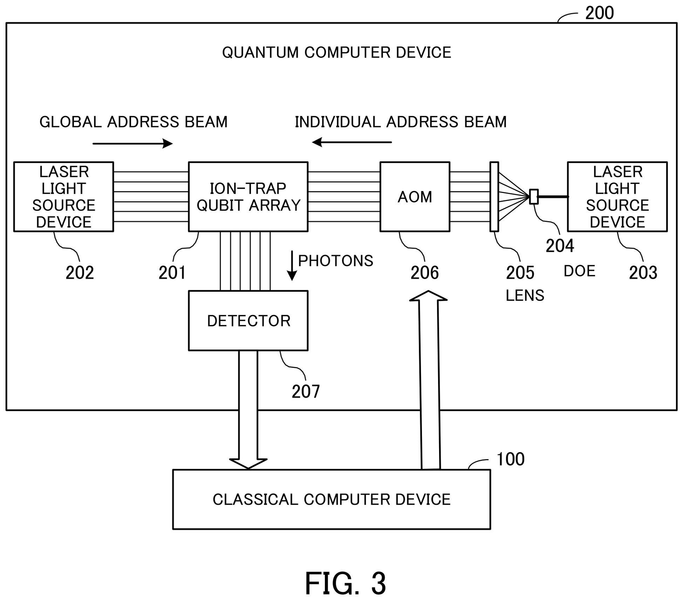

FIG. 3 illustrates an example of a hardware configuration of a quantum computer device. The quantum computer device 200 includes an ion-trap qubit array 201, a plurality of laser light source devices 202 and 203, a diffractive optical element (DOE) 204, a lens 205, an acousto-optic modulator (AOM) 206, and a detector 207.

The ion-trap qubit array 201 is a plurality of qubits whose states are represented using an ion trap. One laser light source device 202 outputs a global-address beam that irradiates a plurality of qubits. The other laser light source device 203 outputs laser light that serves as an individual address beam. The laser light output from the laser light source device 203 is incident on the lens 205 via the DOE 204, whereby the laser light becomes a plurality of parallel laser beams and enters the AOM 206. The AOM 206, in accordance with a gate operation to be performed, modulates the frequency and amplitude of the laser beams. The laser light modulated by the AOM 206 is irradiated, as individual address beams, onto the plurality of qubits, whereby gate operations on any selected qubits are performed. The detector 207 detects photons output from a qubit to be measured. Based on the amount of photons detected by the detector 207, a state of the qubit is measured.

The classical computer device 100 controls the quantum computer device 200 and causes the quantum computer device 200 to perform gate operations via the AOM 206 or to perform state measurement via the detector 207.

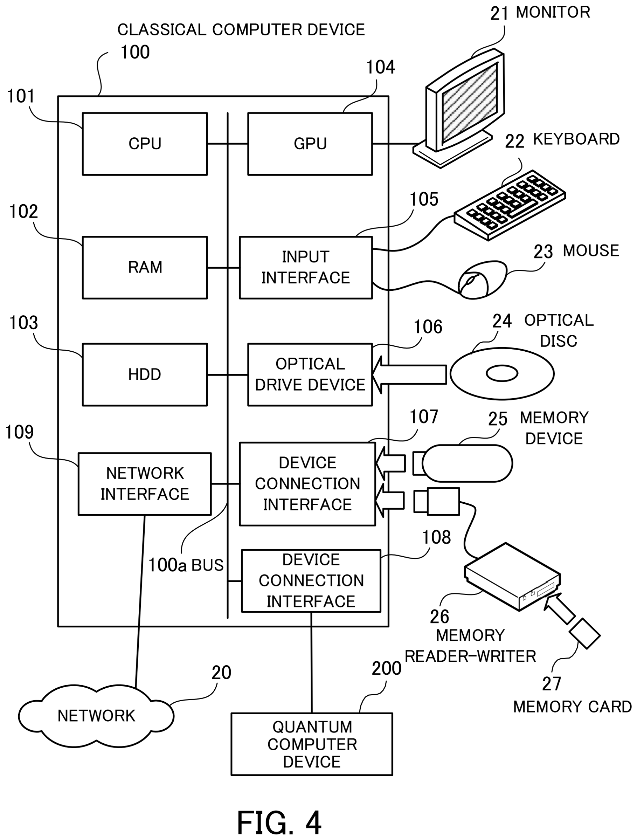

FIG. 4 illustrates an example of a hardware configuration of a classical computer device. The classical computer device 100 is controlled by a central processing unit (CPU) 101. The CPU 101 is a processor that executes program instructions. The CPU 101 may include a plurality of processor cores. The CPU 101 may alternatively be configured as a plurality of processors, and may be a microprocessing unit (MPU) or a digital signal processor (DSP). At least a part of functions realized by execution of a program by the CPU 101 may alternatively be implemented by electronic circuits such as an application specific integrated circuit (ASIC) or a programmable logic device (PLD). A bus 100a connects the CPU 101 to a random access memory (RAM) 102 and a plurality of peripheral devices.

The RAM 102 serves as a main storage of the classical computer device 100. In the RAM 102, at least a part of a program of an operating system (OS) and application programs to be executed by the CPU 101 is temporarily stored. Various data used for processing by the CPU 101 are also stored in the RAM 102. The classical computer device 100 may include a memory other than the RAM, and may include a plurality of memories.

Peripheral devices connected to the bus 100a include a hard disk drive (HDD) 103, a graphics processing unit (GPU) 104, an input interface 105, an optical drive device 106, device connection interfaces 107 and 108, and a network interface 109.

The HDD 103 serves as an auxiliary storage of the classical computer device 100. The HDD 103 writes and reads data magnetically to and from a built-in magnetic disk. A program of the OS, application programs, and various data are stored in the HDD 103. The classical computer device 100 may include another type of auxiliary storage such as a flash memory or a solid state drive (SSD), and may include a plurality of auxiliary storage devices.

A monitor 21 is connected to the GPU 104. The GPU 104, in accordance with instructions from the CPU 101, displays images on a screen of the monitor 21. Examples of the monitor 21 include a display device using organic electroluminescence (EL) and a liquid crystal display device.

A keyboard 22 and a mouse 23 are connected to the input interface 105. The input interface 105 transmits to the CPU 101 signals sent from the keyboard 22 and the mouse 23. The mouse 23 is an example of a pointing device, and another pointing device may be used. Examples of other pointing devices include a touch panel, a tablet, a touchpad, and a trackball.

The optical drive device 106 reads data recorded on an optical disc 24 by using laser light or the like. The optical disc 24 is a portable recording medium on which data are recorded so as to be readable by light reflection. Examples of the optical disc 24 include a digital versatile disc (DVD), a DVD-RAM, a compact disc read-only memory (CD-ROM), and a CD-recordable/rewriteable (CD-R/RW).

The device connection interface 107 is a communication interface for connecting peripheral devices to the classical computer device 100. For example, a memory device 25 and a memory reader-writer 26 are connectable to the device connection interface 107. The memory device 25 is a recording medium equipped with a communication function for the device connection interface 107. The memory reader-writer 26 is a device that writes data to, or reads data from, a memory card 27. The memory card 27 is a card-type recording medium.

The device connection interface 108 is a communication interface for connecting the quantum computer device 200 to the classical computer device 100. The classical computer device 100 transmits, via the device connection interface 108, instructions for controlling qubits to the quantum computer device 200.

The network interface 109 is connected to the network 20. The network interface 109 transmits and receives data to and from another computer or communication equipment via the network 20.

With the above hardware configuration, the classical computer device 100 realizes processing functions of the second embodiment. The information processing apparatus 10 described in the first embodiment is also realizable by hardware similar to the classical computer device 100 illustrated in FIG. 4. The CPU 101 is an example of the processing unit 12 described in the first embodiment.

The classical computer device 100 realizes the processing functions of the second embodiment, for example, by executing a program recorded on a computer-readable recording medium. A program describing processing contents to be executed by the classical computer device 100 is recordable on various recording media. For example, a program to be executed by the classical computer device 100 is storable in the HDD 103. The CPU 101 loads at least a part of a program in the HDD 103 into the RAM 102 and executes the program. A program to be executed by the classical computer device 100 is also recordable on portable recording media such as the optical disc 24, the memory device 25, and the memory card 27. A program stored in a portable recording medium becomes executable after being installed in the HDD 103 under control from the CPU 101, for example. The CPU 101 may alternatively read and execute a program directly from a portable recording medium.

In a system as described above, the classical computer device 100 obtains, from the terminals 401, 402, and so on, quantum circuits in which procedures for gate operations on qubits for quantum computation are described. The quantum circuits obtained from the terminals 401, 402, and so on include gate operations of three or more qubits. On the other hand, gate operations in the quantum computer device 200 are limited to gate operations of one-qubit gates or two-qubit gates.

Accordingly, the classical computer device 100 converts quantum gates of three or more qubits included in a quantum circuit to be subjected to quantum computation into equivalent circuits using one-qubit gates or two-qubit gates executable in the quantum computer device 200. The classical computer device 100 then instructs the quantum computation system 300 to execute quantum computation according to the converted quantum circuit.

The quantum computation system 300 described above performs quantum computation based on a user-designated quantum circuit. At that time, the quantum computation system 300 executes quantum computation in which errors due to large, unpredictable noise are reduced for the quantum circuit to be computed.

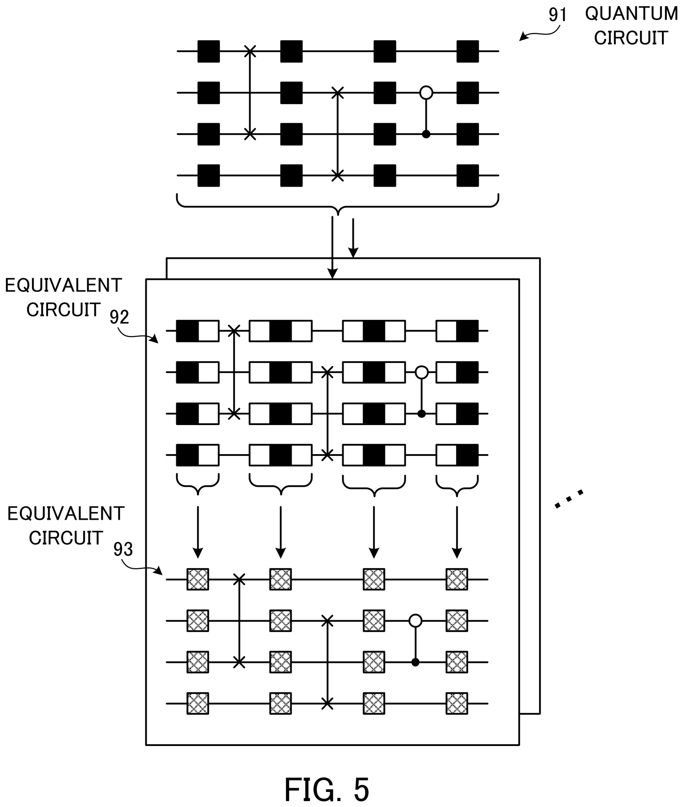

Note that RC exists as a quantum error-mitigation technique for reducing errors; however, RC is not effective with respect to noise other than coherent noise. The limitations of quantum error-mitigation effects by RC will be described below with reference to FIGS. 5 to 9.

FIG. 5 illustrates an example of a quantum circuit generated by RC. In RC, an overall-equivalent quantum circuit (equivalent circuit 92) is generated by inserting one-qubit gates into a quantum circuit 91 that is a target of quantum computation. The types of the inserted one-qubit gates are determined at random within a range that preserves overall equivalence. In FIG. 5, one-qubit gates included in the quantum circuit 91 are represented by black rectangles, and one-qubit gates inserted in the equivalent circuit 92 are represented by white rectangles. A plurality of adjacent one-qubit gates is combinable. Accordingly, an equivalent circuit 93 is generated in which adjacent one-qubit gates in the equivalent circuit 92 are replaced with a single one-qubit gate.

In RC, a plurality of equivalent circuits is generated by the same procedure as that of the equivalent circuit 93. The generated plurality of equivalent circuits is overall equivalent to the quantum circuit 91, but the types of one-qubit gates included or the order of gate operations differ.

Quantum noise depends on the quantum state of each qubit. Moreover, comprehensive pre-measurement and compensation of all noise is difficult. Accordingly, in RC, quantum computation is executed based on each of the plurality of equivalent circuits, the plurality of equivalent circuits being equivalent to the quantum circuit 91 and being based on random one-qubit gates, and outputs of the quantum computations are averaged. Averaging suppresses errors that would otherwise arise from quantum computation under worst-case noise; that is, quantum errors are mitigated.

Next, the mitigation effect of RC on quantum errors will be described concretely by using an example of a Toffoli gate.

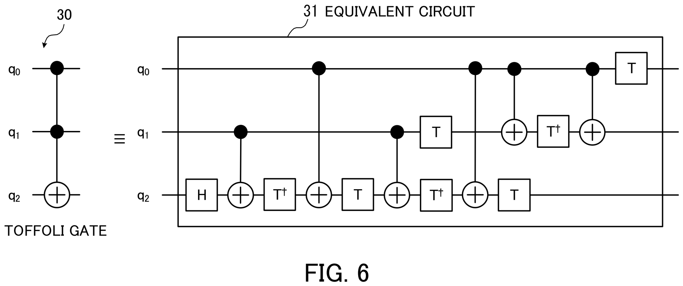

FIG. 6 illustrates an example of an equivalent circuit of a Toffoli gate. The gate operation of a Toffoli gate 30 is represented by the following matrix.

$$\begin{bmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 0 & 1 \\ 0 & 0 & 0 & 0 & 0 & 0 & 1 & 0 \end{bmatrix} \tag{1}$$

The Toffoli gate 30 is a three-qubit gate. On the other hand, in current NISQ devices, gate operations are limited to one-qubit gates or two-qubit gates. Therefore, the Toffoli gate 30 is converted into an equivalent circuit 31 composed of one-qubit gates and two-qubit gates. By inserting one-qubit gates at random into the equivalent circuit 31, a plurality of equivalent circuits by RC is generated from the equivalent circuit 31.

When quantum computation in accordance with the generated equivalent circuits is executed on the quantum computer device 200 of the NISQ type, errors attributable to noise occur. For each state (bit string), the magnitude of error is represented, for example, by the absolute value of the difference between an output probability in a noise-free case (noiseless output probability: $P_I$) and an output probability in a noisy case (noisy output probability: $P_N$), "$|P_I - P_N|$".

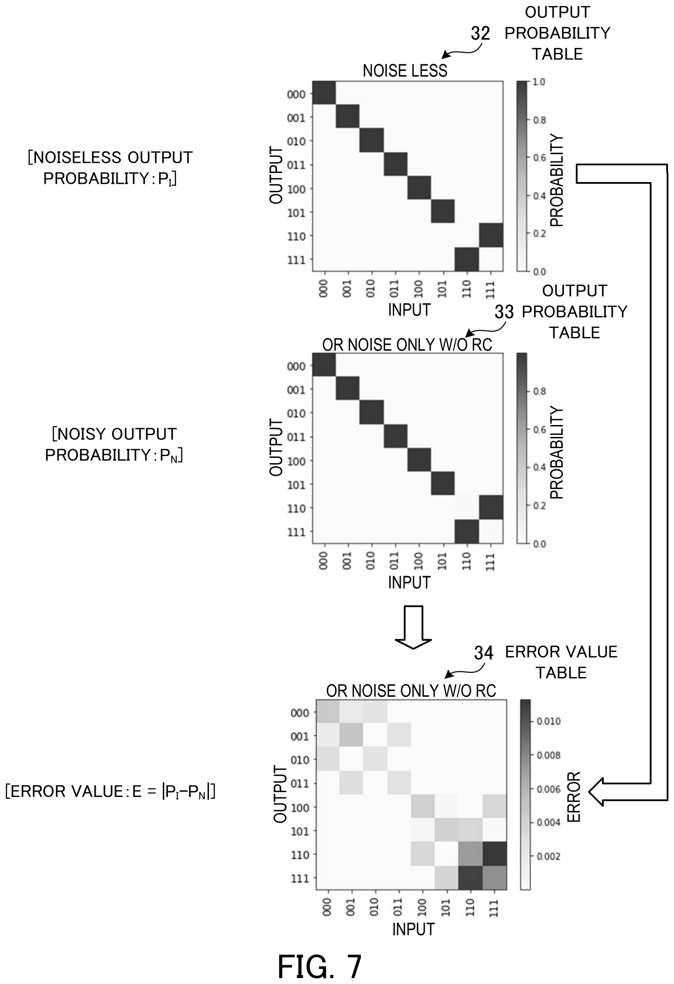

FIG. 7 illustrates an example of errors that arise with a Toffoli gate. FIG. 7 depicts the occurrence of computational errors in gate operations of the Toffoli gate 30.

Output probability tables 32 and 33 indicate, for each input state (bit string), output probabilities after the gate operation of the Toffoli gate 30. In the output probability tables 32 and 33, column labels denote input states and row labels denote output states. In each rectangular region in the output probability tables 32 and 33, the shade indicates, for the corresponding input state, the probability that the corresponding output state is obtained.

The output probability table 32 indicates the noiseless output probability "$P_I$". In the output probability table 32, the probability in the darkest region is "1.0". In the absence of errors, output-state probabilities follow the matrix set forth in Expression (1). That is, the output probability corresponding to an element that is "1" in Expression (1) is "1", and the output probability corresponding to an element that is "0" in Expression (1) is "0".

The output probability table 33 indicates the noisy output probability "$P_N$". In the output probability table 33, the probability in the darkest region is "approximately 0.9". In the presence of errors, output-state probabilities do not conform to the matrix set forth in Expression (1). That is, for each element that is "1" in Expression (1), the corresponding output probability is less than 1, and for at least some elements that are "0" in Expression (1), the corresponding output probability is greater than "0".

An error value table 34 indicates, for each input state, an error value ($E = |P_I - P_N|$) due to the gate operation of the Toffoli gate 30. In the error value table 34, column labels denote input states and row labels denote output states. In each rectangular region in the error value table 34, the shade indicates the error value when the corresponding output state is obtained for the corresponding input state.

In the error value table 34, the error value in the darkest region is "approximately 0.011". As illustrated in the error value table 34, the error-occurrence situation varies greatly for each combination of input state and output state.

As an index for evaluating overall influence of noise, total variation distance (TVD) is used, for example. TVD is a value based on a sum of differences between an ideal, noise-free probability and a noisy probability, and is expressed by Expression (2) below.

$$d_{TV}(\mathcal{P}, \mathcal{P}_{ideal}) = \frac{1}{2} \sum_{x \in X} |\mathcal{P}(x) - \mathcal{P}_{ideal}(x)| \qquad (2)$$

Here, $p_{ideal}(x)$ denotes the occurrence probability, in an ideal situation (without noise), of a string of values of qubits (bit string x). p(x) denotes the occurrence probability of the bit string x measured experimentally or by simulation. In Expression (2), for each bit string x belonging to a set X of possible bit strings, a difference between the noisy probability and the noise-free probability is calculated; one half of the sum of those differences gives TVD. A smaller value of TVD indicates a smaller influence of noise.

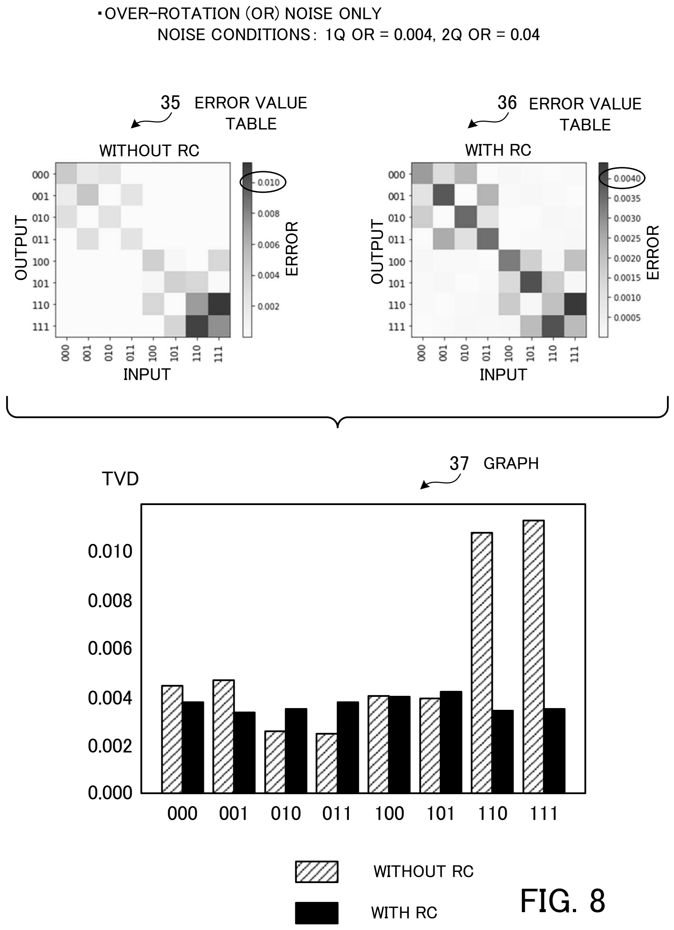

FIG. 8 illustrates an example of an error-mitigation effect of RC in a case where only over-rotation noise is present. As noise conditions, the over-rotation (OR) noise is "0.004" for one-qubit gates and "0.04" for two-qubit gates.

The error-occurrence situation without RC is indicated in an error value table 35, and an error-occurrence situation with RC applied is indicated in an error value table 36. Without RC, the maximum error value is about "0.011". With RC, the maximum error value slightly exceeds "0.0040".

A graph 37 presents computation results of TVD for each input state, in the cases without RC and with RC. In the graph 37, the height of a hatched bar indicates TVD without RC, and the height of a black bar indicates TVD with RC.

Without RC, TVD becomes exceedingly large for the input states "110" and "111". In a general quantum circuit, it is unknown which input states yield exceedingly large TVD. Accordingly, there is a possibility that errors will far exceed predictions.

On the other hand, with RC, differences in TVD due to differences among input states are smaller than in the case without RC. Therefore, the magnitude of occurring errors stays within a predicted range, and quantum computation is performed with an accuracy as expected.

Thus, where the occurring noise is only over-rotation noise, applying RC keeps the magnitude of the occurring errors within a predicted range. However, when noise other than over-rotation noise is included, the error-mitigation effect of RC is limited.

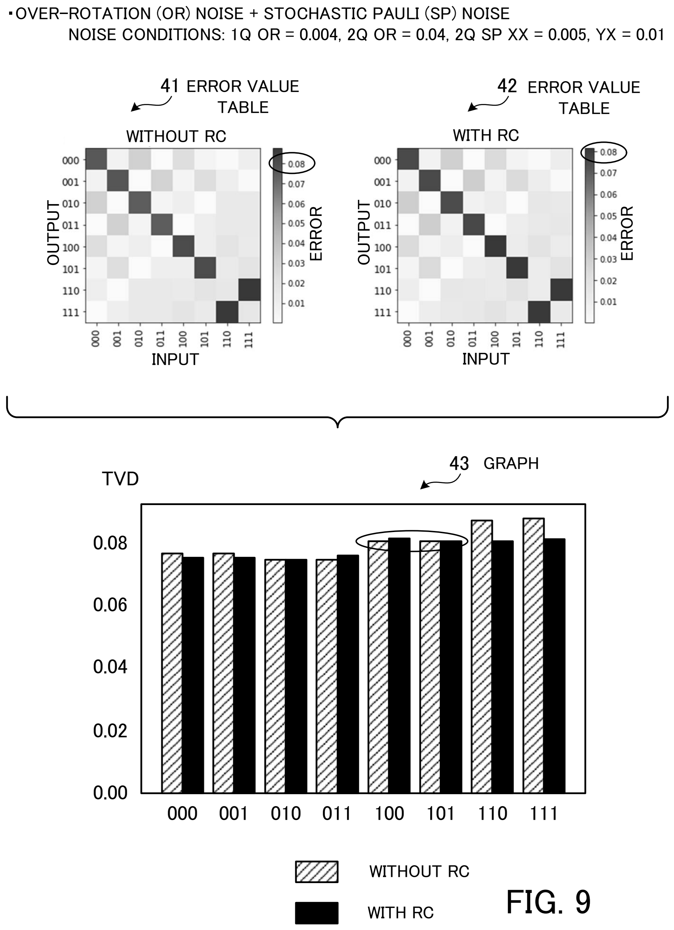

FIG. 9 illustrates an example of an error-mitigation effect of RC in a case where over-rotation noise and stochastic Pauli noise are present. As noise conditions, the OR noise is "0.004" for one-qubit gates and "0.04" for two-qubit gates. The stochastic Pauli noise for two-qubit gates is "0.005" for 'XX', and "0.01" for 'YX'.

The error-occurrence situation without RC is presented in an error value table 41, and the error-occurrence situation with RC applied is presented in an error value table 42. Without RC, the maximum error value slightly exceeds "0.08". With RC, the maximum error value also slightly exceeds "0.08".

A graph 43 presents the results of computing the TVD for each input state, for the cases without RC and with RC. In the graph 43, the height of a hatched bar indicates TVD without RC, and the height of a black bar indicates TVD with RC.

As depicted in the graph 43, for the input states "100" and "101", TVD without RC is greater than the average TVD, but TVD is almost unchanged between the cases without RC and with RC. That is, for the input states "100" and "101", no error-reduction effect is obtained.

Accordingly, with RC, when noise other than OR noise is present, a sufficient reduction in TVD (quantum error-mitigation effect) is not expected.

Therefore, in the quantum computation system 300 according to the second embodiment, the classical computer device 100 generates, by using an MS gate, a plurality of equivalent circuits corresponding to a quantum circuit to be computed. The MS gate is an entangling gate executable in, for example, an ion-trap-type quantum device.

A gate operation by the MS gate is represented by Expression (3) below.

$$MS(\varphi_0, \varphi_1) = \frac{1}{\sqrt{2}} \begin{bmatrix} 1 & 0 & 0 & -ie^{-i(\varphi_0+\varphi_1)} \\ 0 & 1 & -ie^{-i(\varphi_0-\varphi_1)} & 0 \\ 0 & -ie^{i(\varphi_0-\varphi_1)} & 1 & 0 \\ -ie^{i(\varphi_0+\varphi_1)} & 0 & 0 & 1 \end{bmatrix} (3)$$

"$\varphi_0$ and $\varphi_1$" are parameters regarding a rotation angle. A gate operation at MS(0, 0) is equivalent to $R_{XX}(\theta = \pi/2)$. In the MS gate, by setting "$\varphi_0$ and $\varphi_1$" to selected values, various entangling gates are realized.

The quantum computation system 300 generates, as equivalent circuits for the quantum circuit to be computed, a plurality of quantum circuits implemented with MS gates at different angles "$\varphi_0, \varphi_1$". The quantum computation system 300 then averages the output probabilities of quantum computation obtained in accordance with those quantum circuits. As a result, noise occurring in the quantum circuit is averaged irrespective of the input state, and error mitigation of the quantum circuit is realized.

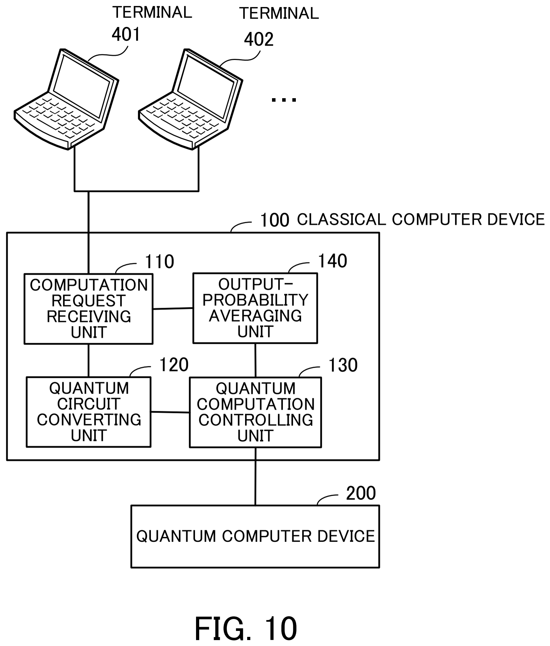

FIG. 10 illustrates an example of functions included in the classical computer device. The classical computer device 100 includes a computation request receiving unit 110, a quantum circuit converting unit 120, a quantum computation controlling unit 130, and an output-probability averaging unit 140.

The computation request receiving unit 110 receives computation requests for quantum computation from the terminals 401, 402, and so on. A computation request includes, for example, a quantum circuit that includes gate operations of three-qubit gates or more. The computation request receiving unit 110 requests the quantum circuit converting unit 120 to convert the obtained quantum circuit. Upon receiving a computation result from the output-probability averaging unit 140, the computation request receiving unit 110 transmits the computation result to the terminal that sent the computation request.

The quantum circuit converting unit 120 converts the quantum circuit obtained from the computation request receiving unit 110 into a plurality of quantum circuits using MS gates in the quantum computer device 200. In doing so, as a pair of rotation-angle parameters "$\varphi_0, \varphi_1$" to be used for the MS gate in each converted quantum circuit, the quantum circuit converting unit 120 applies a respective pair of values that is different for each converted quantum circuit. The quantum circuit converting unit 120 transmits the converted quantum circuits to the quantum computation controlling unit 130.

The quantum computation controlling unit 130, in accordance with each of the plurality of converted quantum circuits obtained from the quantum circuit converting unit 120, issues instructions to the quantum computer device 200 to perform gate operations on qubits. Each time gate operations according to a quantum circuit are completed, the quantum computation controlling unit 130 receives a measurement result of qubit states from the quantum computer device 200. The measurement result is a probability distribution of qubit states (bit strings). The quantum computation controlling unit 130 transmits the measurement results obtained from the respective quantum circuits to the output-probability averaging unit 140.

The output-probability averaging unit 140 averages, for each qubit state, probabilities obtained from the respective quantum circuits, and adopts the averaged values as probabilities of the respective states. Then, on the basis of the probability distribution for the respective states, the output-probability averaging unit 140 computes a solution to the problem to be computed and transmits the solution to the computation request receiving unit 110 as a result of the quantum computation.

Functions of the respective elements illustrated in FIG. 10 are realized, for example, by causing a computer to execute program modules corresponding to the respective elements.

Next, a method will be described for determining a pair of parameters "$\varphi_0, \varphi_1$" of an MS gate to be used in converted quantum circuits when a quantum circuit to be computed is converted into a plurality of equivalent quantum circuits.

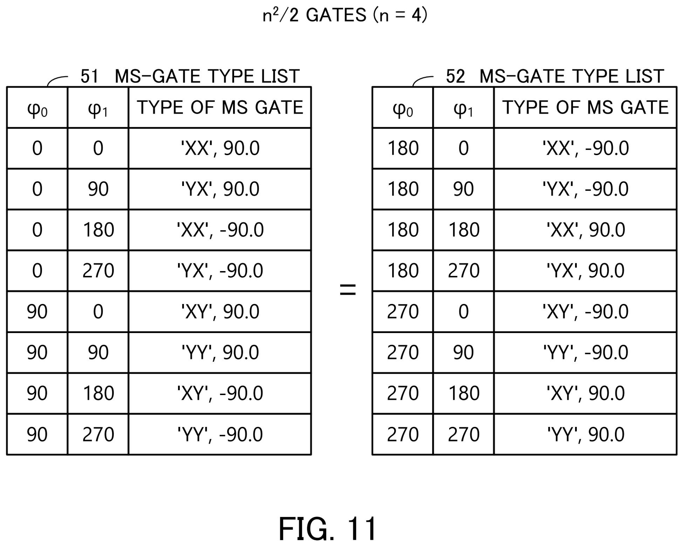

FIG. 11 illustrates an example of a method for determining parameters of an MS gate. For example, the quantum circuit converting unit 120 divides, for each of "$\varphi_0$ and $\varphi_1$", a range of possible values from "0° to 360°" into n parts (where n is an integer of 2 or greater). The quantum circuit converting unit 120 adopts, as the respective candidate values for "$\varphi_0$ and $\varphi_1$", the angles at the boundaries obtained by dividing the range from 0° to 360° into n parts. For example, when n = 4, "0°, 90°, 180°, and 270°"' are the candidate values.

For each combination pattern (candidate-value sequence) of the candidate values of "$\varphi_0$ and $\varphi_1$", a type of MS gate obtained when those candidate values are applied is identified. The number of combination patterns of the candidate values is $n^2$. For example, when n = 4, the number of combination patterns of the candidate values is "16".

In FIG. 11, the MS-gate types for the respective combination patterns are presented in two MS-gate type lists 51 and 52.

In the MS-gate type list 51, where the angle of "$\varphi_0$" is "0°" or "90°", the MS-gate type for each candidate value of "$\varphi_1$" is indicated. When "$\varphi_0 = 0°$ and $\varphi_1 = 0°$", the MS-gate type is "'XX', 90.0" ($R_{XX}(\pi/2)$). When "$\varphi_0 = 0°$ and $\varphi_1 = 90°$", the type is "'YX', 90.0" ($R_{YX}(\pi/2)$). When "$\varphi_0 = 0°$ and $\varphi_1 = 180°$", the type is "'XX', -90.0" ($R_{XX}(-\pi/2)$). When "$\varphi_0 = 0°$ and $\varphi_1 = 270°$", the type is "'YX', -90.0" ($R_{YX}(-\pi2)$). When "$\varphi_0 = 90°$ and $\varphi_1 = 0°$", the type is "'XY', 90.0" ($R_{XY}(\pi/2)$). When "$\varphi_0 = 90°$ and $\varphi_1 = 90°$", the type is "'YY', 90.0" ($R_{YY}(\pi/2)$). When "$\varphi_0 = 90°$ and $\varphi_1 = 180°$", the type is "'XY', -90.0" ($R_{XY}(-\pi/2)$). When "$\varphi_0 = 90°$ and $\varphi_1 = 270°$", the type is "'YY', -90 . 0" ($R_{YY}(-\pi/2)$).

In the MS-gate type list 52, where the angle of "$\varphi_0$" is "180°" or "270°", the MS-gate type for each candidate value of "$\varphi_1$" is indicated. When "$\varphi_0 = 180°$ and $\varphi_1 = 0°$", the MS-gate type is "'XX', -90.0" ($R_{XX}(-\pi/2)$). When "$\varphi_0 = 180°$ and $\varphi_1 = 90°$", the type is "'YX', -90.0" ($R_{YX}(-\pi/2)$). When "$\varphi_0 = 180°$ and $\varphi_1 = 180°$", the type is "'XX', 90.0" ($R_{XX}(\pi/2)$). When "$\varphi_0 = 180°$ and $\varphi_1 = 270°$", the type is "'YX', 90.0" ($R_{YX}(\pi/2)$). When "$\varphi_0 = 270°$ and $\varphi_1 = 0°$", the type is "'XY', -90.0" ($R_{XY}(-\pi/2)$). When "$\varphi_0 = 270°$ and $\varphi_1 = 90°$", the type is "'YY', -90.0" ($R_{YY}(-\pi/2)$). When "$\varphi_0 = 270°$ and $\varphi_1 = 180°$", the type is "'XY', 90.0" ($R_{XY}(\pi/2)$). When "$\varphi_0 = 270°$ and $\varphi_1 = 270°$", the type is "'YY', 90.0" ($R_{YY}(\pi/2)$).

Every MS-gate type presented in the MS-gate type list 52 appears also in the MS-gate type list 51. For example, the MS-gate type for "$\varphi_0 = 180°$ and $\varphi_1 = 0°$" is the same as for "$\varphi_0 = 0°$ and $\varphi_1 = 180°$". Accordingly, the number of MS-gate types is one half of the number of combination patterns of candidate values of "$\varphi_0$ and $\varphi_1$". That is, when the value ranges of "$\varphi_0$ and $\varphi_1$" are divided into n parts, the number of MS-gate types generable is "$n^2/2$". When n = 4, it suffices to generate the eight MS-gate types set forth in the MS-gate type list 51.

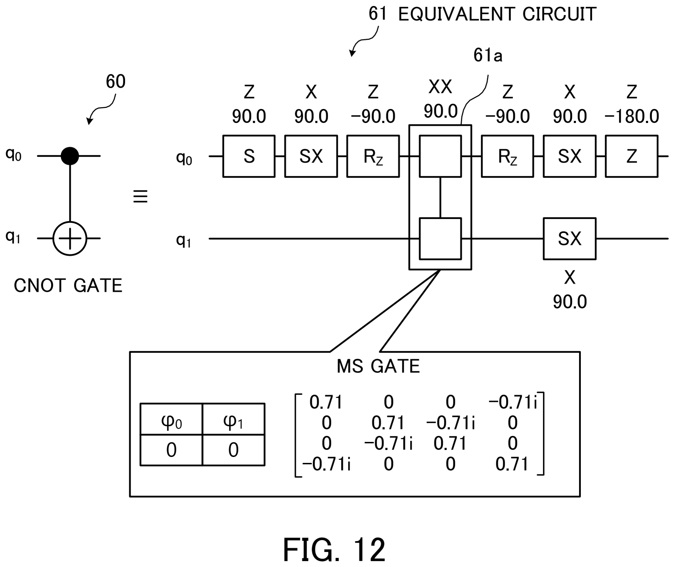

When n = 4, for example, the quantum circuit converting unit 120 generates eight quantum circuits that are equivalent to the quantum circuit to be computed. If the original quantum circuit includes a Toffoli gate, the quantum circuit converting unit 120 converts the Toffoli gate 30 into the equivalent circuit 31 as illustrated in FIG. 6, and converts the six CNOT gates included in the equivalent circuit into equivalent circuits using MS gates. Examples of conversion of a CNOT gate are illustrated in FIGS. 12 to 19.

FIG. 12 illustrates a first example of an equivalent circuit of a CNOT gate. In FIG. 12, a CNOT gate 60 uses a qubit "$q_0$" as a control qubit and a qubit "$q_1$" as a target qubit. An equivalent circuit 61 in FIG. 12 is a quantum circuit equivalent to the CNOT gate 60 and using an MS gate 61a with parameters "$\varphi_0 = 0°$ and $\varphi_1 = 0°$".

In the equivalent circuit 61, on the qubit "$q_0$", an S gate (rotation of "90.0°" about the Z axis), an SX gate (rotation of "90.0°" about the X axis), and an $R_Z$ gate (rotation of "-90.0°" about the Z axis) are disposed. Next, the MS gate 61a with "$\varphi_0 = 0°$ and $\varphi_1 = 0°$", acting on the qubits "$q_0$ and $q_1$", is disposed. This MS gate 61a is of type "'XX', 90.0", and its gate operation is represented by Expression (4).

$$\begin{bmatrix} 0.71 & 0 & 0 & -0.71i \\ 0 & 0.71 & -0.71i & 0 \\ 0 & -0.71i & 0.71 & 0 \\ -0.71i & 0 & 0 & 0.71 \end{bmatrix} \quad (4)$$

After the MS gate 61a, an $R_Z$ gate (rotation of "-90.0°" about the Z axis) is disposed on the qubit "$q_0$". Next, SX gates (rotation of "90.0°" about the X axis) are disposed on the respective qubits "$q_0$ and $q_1$". Thereafter, a Z gate (rotation of "-180.0°" about the Z axis) is disposed on the qubit "$q_0$".

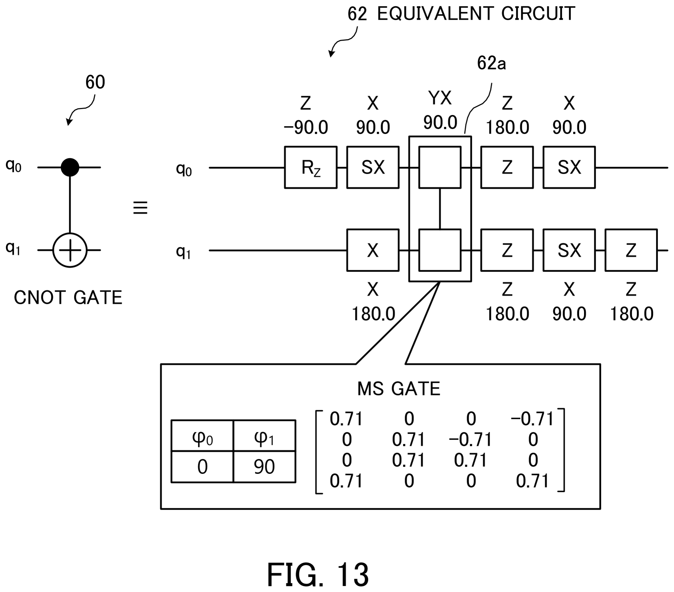

FIG. 13 illustrates a second example of an equivalent circuit of a CNOT gate. An equivalent circuit 62 in FIG. 13 is a quantum circuit equivalent to the CNOT gate 60 and using an MS gate 62a with parameters "$\varphi_0 = 0°$ and $\varphi_1 = 90°$".

In the equivalent circuit 62, on the qubit "$q_0$", an $R_Z$ gate (rotation of "-90.0°" about the Z axis) and an SX gate (rotation of "90.0°" about the X axis) are disposed. On the qubit "$q_1$", an X gate (rotation of "180.0°" about the X axis) is disposed. Next, the MS gate 62a with "$\varphi_0 = 0°$ and $\varphi_1 = 90°$", acting on the qubits "$q_0$ and $q_1$", is disposed. This MS gate 62a is of type "'YX', 90.0", and its gate operation is represented by Expression (5).

$$\begin{bmatrix} 0.71 & 0 & 0 & -0.71 \\ 0 & 0.71 & -0.71 & 0 \\ 0 & 0.71 & 0.71 & 0 \\ 0.71 & 0 & 0 & 0.71 \end{bmatrix} \tag{5}$$

After the MS gate 62a, on each of the qubits "$q_0$ and $q_1$", a Z gate (rotation of "180.0°" about the Z axis) and an SX gate (rotation of "90.0°" about the X axis) are disposed, and then a Z gate (rotation of "180.0°" about the Z axis) is disposed on the qubit "$q_1$".

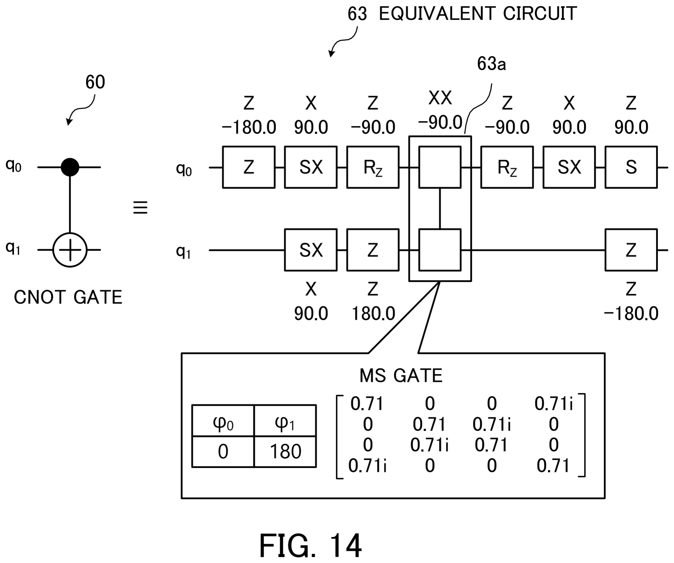

FIG. 14 illustrates a third example of an equivalent circuit of a CNOT gate. An equivalent circuit 63 in FIG. 14 is a quantum circuit equivalent to the CNOT gate 60 and using an MS gate 63a with parameters "$\varphi_0 = 0°$ and $\varphi_1 = 180°$".

In the equivalent circuit 63, on the qubit "$q_0$", a Z gate (rotation of "-180.0°" about the Z axis) is disposed. Next, SX gates (rotation of "90.0°" about the X axis) are disposed on the respective qubits "$q_0$ and $q_1$". Next, on the qubit "$q_0$", an $R_Z$ gate (rotation of "-90.0°" about the Z axis) is disposed. Thereafter, the MS gate 63a with "$\varphi_0 = 0°$ and $\varphi_1 = 180°$", acting on the qubits "$q_0$ and $q_1$", is disposed. This MS gate 63a is of type "'XX', -90.0", and its gate operation is represented by Expression (6).

$$\begin{bmatrix} 0.71 & 0 & 0 & 0.71i \\ 0 & 0.71 & 0.71i & 0 \\ 0 & 0.71i & 0.71 & 0 \\ 0.71i & 0 & 0 & 0.71 \end{bmatrix} \tag{6}$$

After the MS gate 63a, on the qubit "$q_0$", an $R_Z$ gate (rotation of "-90.0°" about the Z axis), an SX gate (rotation of "90.0°" about the X axis), and an S gate (rotation of "90.0°" about the Z axis) are disposed. A Z gate (rotation of "-180.0°" about the Z axis) is disposed on the qubit "$q_1$".

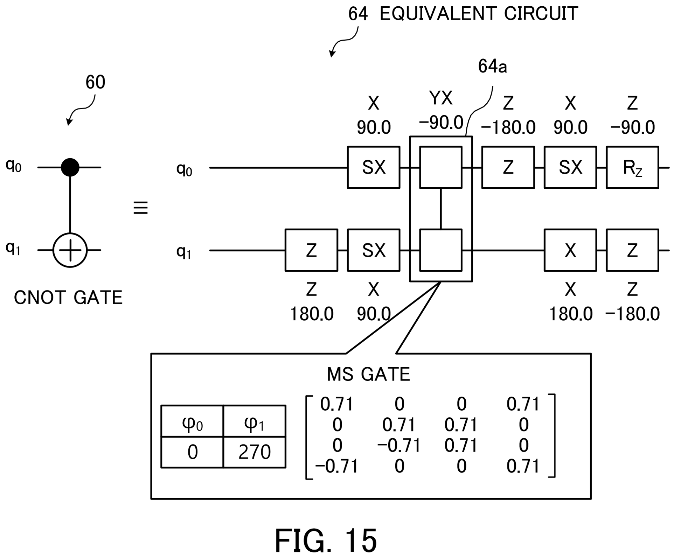

FIG. 15 illustrates a fourth example of an equivalent circuit of a CNOT gate. An equivalent circuit 64 in FIG. 15 is a quantum circuit equivalent to the CNOT gate 60 and using an MS gate 64a with parameters "$\varphi_0 = 0°$ and $\varphi_1 = 270°$".

In the equivalent circuit 64, on the qubit "$q_1$", a Z gate (rotation of "180.0°" about the Z axis) is disposed. Next, SX gates (rotation of "90.0°" about the X axis) are disposed on the respective qubits "$q_0$ and $q_1$". Thereafter, the MS gate 64a with "$\varphi_0 = 0°$ and $\varphi_1 = 270°$", acting on the qubits "$q_0$ and $q_1$", is disposed. This MS gate 64a is of type "'YX', -90.0", and its gate operation is represented by Expression (7).

$$\begin{bmatrix} 0.71 & 0 & 0 & 0.71 \\ 0 & 0.71 & 0.71 & 0 \\ 0 & -0.71 & 0.71 & 0 \\ -0.71 & 0 & 0 & 0.71 \end{bmatrix} \tag{7}$$

After the MS gate 64a, on the qubit "$q_0$", a Z gate (rotation of "-180.0°" about the Z axis) and an SX gate (rotation of "90.0°" about the X axis) are disposed, and on the qubit "$q_1$", an X gate (rotation of "180.0°" about the X axis) is disposed. Next, an $R_Z$ gate (rotation of "-90.0°" about the Z axis) is disposed on the qubit "$q_0$", and thereafter a Z gate (rotation of "-180.0°" about the Z axis) is disposed on the qubit "$q_1$".

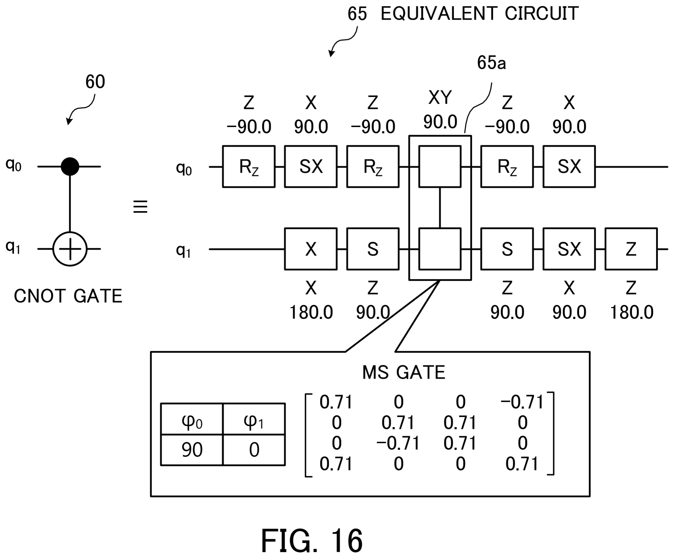

FIG. 16 illustrates a fifth example of an equivalent circuit of a CNOT gate. An equivalent circuit 65 in FIG. 16 is a quantum circuit equivalent to the CNOT gate 60 and using an MS gate 65a with parameters "$\varphi_0 = 90°$ and $\varphi_1 = 0°$".

In the equivalent circuit 65, on the qubit "$q_0$", an $R_Z$ gate (rotation of "-90.0°" about the Z axis) and an SX gate (rotation of "90.0°" about the X axis) are disposed. On the qubit "$q_1$", an X gate (rotation of "180.0°" about the X axis) is disposed. Next, an $R_Z$ gate (rotation of "-90.0°" about the Z axis) is disposed on the qubit "$q_0$", and an S gate (rotation of "90.0°" about the Z axis) is disposed on the qubit "$q_1$". Thereafter, the MS gate 65a with "$\varphi_0 = 90°$ and $\varphi_1 = 0°$", acting on the qubits "$q_0$ and $q_1$", is disposed. This MS gate 65a is of type "'XY', 90.0", and its gate operation is represented by Expression (8).

$$\begin{bmatrix} 0.71 & 0 & 0 & -0.71 \\ 0 & 0.71 & 0.71 & 0 \\ 0 & -0.71 & 0.71 & 0 \\ 0.71 & 0 & 0 & 0.71 \end{bmatrix} \tag{8}$$

After the MS gate 65a, an $R_Z$ gate (rotation of "-90.0°" about the Z axis) is disposed on the qubit "$q_0$", and an S gate (rotation of "90.0°" about the Z axis) is disposed on the qubit "$q_1$". Next, SX gates (rotation of "90.0°" about the X axis) are disposed on the respective qubits "$q_0$ and $q_1$", and a Z gate (rotation of "180.0°" about the Z axis) is disposed on the qubit "$q_1$".

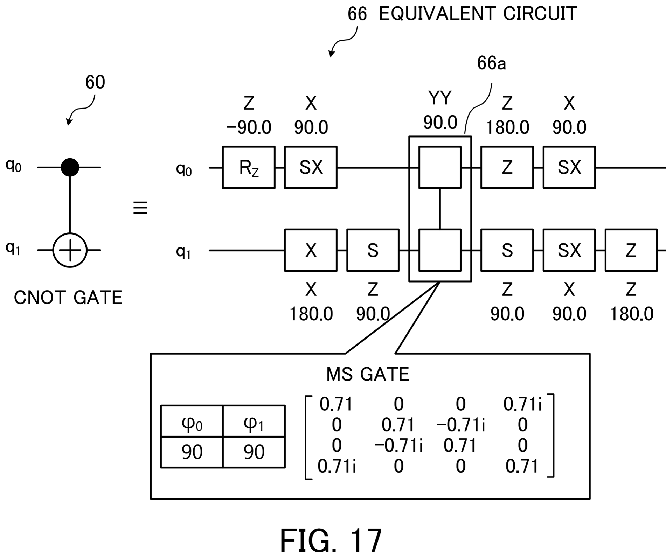

FIG. 17 illustrates a sixth example of an equivalent circuit of a CNOT gate. An equivalent circuit 66 in FIG. 17 is a quantum circuit equivalent to the CNOT gate 60 and using an MS gate 66a with parameters "$\varphi_0 = 90°$ and $\varphi_1 = 90°$".

In the equivalent circuit 66, on the qubit "$q_0$", an $R_Z$ gate (rotation of "-90.0°" about the Z axis) and an SX gate (rotation of "90.0°" about the X axis) are disposed. On the qubit "$q_1$" , an X gate (rotation of "180.0°" about the X axis) is disposed. Next, an S gate (rotation of "90.0°" about the Z axis) is disposed on the qubit "$q_1$". Thereafter, the MS gate 66a with "$\varphi_0 = 90°$ and $\varphi_1 = 90°$", acting on the qubits "$q_0$ and $q_1$", is disposed. This MS gate 66a is of type "'YY', 90.0", and its gate operation is represented by Expression (9).

$$\begin{bmatrix} 0.71 & 0 & 0 & 0.71i \\ 0 & 0.71 & -0.71i & 0 \\ 0 & -0.71i & 0.71 & 0 \\ 0.71i & 0 & 0 & 0.71 \end{bmatrix} \tag{9}$$

After the MS gate 66a, a Z gate (rotation of "180.0°" about the Z axis) is disposed on the qubit "$q_0$", and an S gate (rotation of "90.0°" about the Z axis) is disposed on the qubit "$q_1$". Next, SX gates (rotation of "90.0°" about the X axis) are disposed on the respective qubits "$q_0$ and $q_1$", and a Z gate (rotation of "180.0°" about the Z axis) is disposed on the qubit "$q_1$".

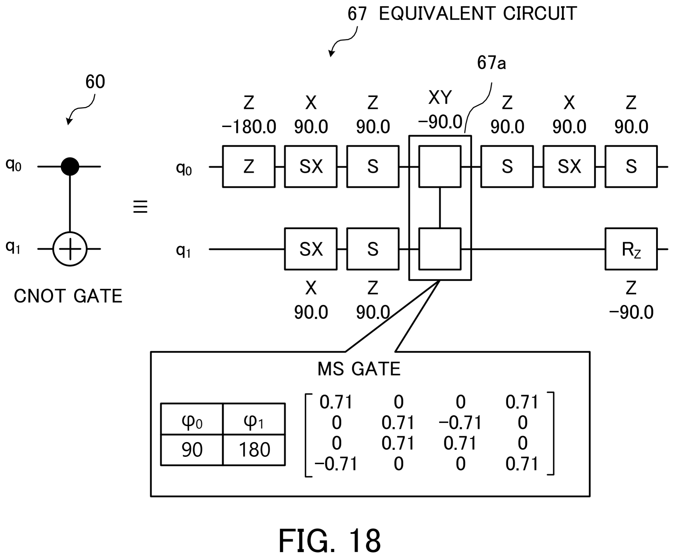

FIG. 18 illustrates a seventh example of an equivalent circuit of a CNOT gate. An equivalent circuit 67 in FIG. 18 is a quantum circuit equivalent to the CNOT gate 60 and using an MS gate 67a with parameters "$\varphi_0 = 90°$ and $\varphi_1 = 180°$".

In the equivalent circuit 67, on the qubit "$q_0$", a Z gate (rotation of "-180.0°" about the Z axis) is disposed. Next, on each of the qubits "$q_0$ and $q_1$", an SX gate (rotation of "90.0°" about the X axis) and an S gate (rotation of "90.0°" about the Z axis) are disposed. Thereafter, the MS gate 67a with "$\varphi_0 = 90°$ and $\varphi_1 = 180°$", acting on the qubits "$q_0$ and $q_1$", is disposed. This MS gate 67a is of type" 'XY' , -90.0", and its gate operation is represented by Expression (10).

$$\begin{bmatrix} 0.71 & 0 & 0 & 0.71 \\ 0 & 0.71 & -0.71 & 0 \\ 0 & 0.71 & 0.71 & 0 \\ -0.71 & 0 & 0 & 0.71 \end{bmatrix} \tag{10}$$

After the MS gate 67a, on the qubit "$q_0$", an S gate (rotation of "90.0°" about the Z axis), an SX gate (rotation of "90.0°" about the X axis), and an S gate (rotation of "90.0°" about the Z axis) are disposed. An $R_Z$ gate (rotation of "-90.0°" about the Z axis) is disposed on the qubit "$q_1$".

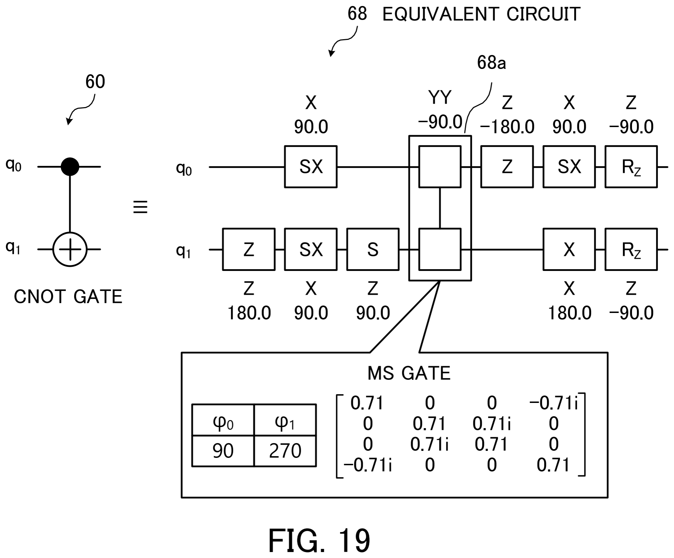

FIG. 19 illustrates an eighth example of an equivalent circuit of a CNOT gate. An equivalent circuit 68 in FIG. 19 is a quantum circuit equivalent to the CNOT gate 60 and using an MS gate 68a with parameters "$\varphi_0 = 90°$ and $\varphi_1 = 270°$".

In the equivalent circuit 68, on the qubit "$q_1$" , a Z gate (rotation of "180.0°" about the Z axis) is disposed. Next, SX gates (rotation of "90.0°" about the X axis) are disposed on the respective qubits "$q_0$ and $q_1$". Next, an S gate (rotation of "90.0°" about the Z axis) is disposed on the qubit "$q_1$". Thereafter, the MS gate 68a with "$\varphi_0 = 90°$ and $\varphi_1 = 270°$", acting on the qubits "$q_0$ and $q_1$", is disposed. This MS gate 68a is of type "'YY', -90.0", and its gate operation is represented by Expression (11).

$$\begin{bmatrix} 0.71 & 0 & 0 & -0.71i \\ 0 & 0.71 & 0.71i & 0 \\ 0 & 0.71i & 0.71 & 0 \\ -0.71i & 0 & 0 & 0.71 \end{bmatrix} \qquad (11)$$

After the MS gate 68a, on the qubit "$q_0$", a Z gate (rotation of "180.0°" about the Z axis) and an SX gate (rotation of "90.0°" about the X axis) are disposed, and on the qubit "$q_1$", an X gate (rotation of "180.0°" about the X axis) is disposed. Thereafter, $R_Z$ gates (rotation of "-90.0°" about the Z axis) are disposed on the respective qubits "$q_0$ and $q_1$".

Thus, the CNOT gate 60 is convertible into any of the eight equivalent circuits 61 to 68. After converting the Toffoli gate 30 included in a quantum circuit corresponding to a problem to be solved into the equivalent circuit 31 (see FIG. 6), the quantum circuit converting unit 120 converts CNOT gates in the equivalent circuit 31 by using each of the eight equivalent circuits 61 to 68.

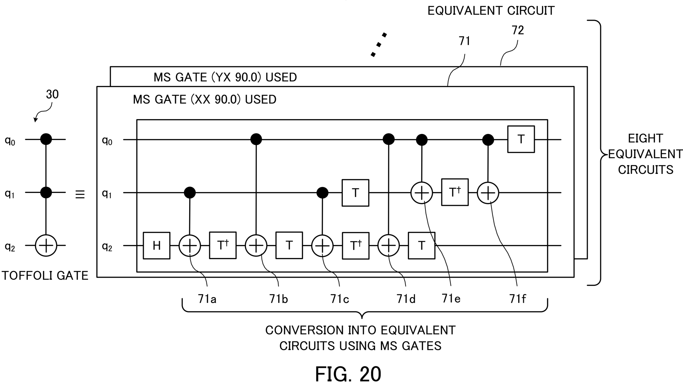

FIG. 20 illustrates an example of an equivalent circuit of a Toffoli gate. The quantum circuit converting unit 120 generates eight equivalent circuits 71, 72, and so on, from the Toffoli gate 30. The CNOT gates contained in the respective equivalent circuits 71, 72, and so on, are converted into one of the equivalent circuits 61 to 68 depicted in FIGS. 12 to 19. For example, six CNOT gates 71a to 71f included in the equivalent circuit 71 are all converted into the equivalent circuit 61 (see FIG. 12) using the MS gate of type "'XX' 90.0".

In this manner, by converting the Toffoli gate 30 included in a quantum circuit corresponding to a problem to be solved into the plurality of equivalent circuits 71, 72, and so on, using MS gates of different types, eight quantum circuits are generated from the quantum circuit corresponding to the problem to be solved. The quantum computation system 300 averages computation results of quantum computation based on the respective generated quantum circuits, whereby errors of the quantum circuit are mitigated.

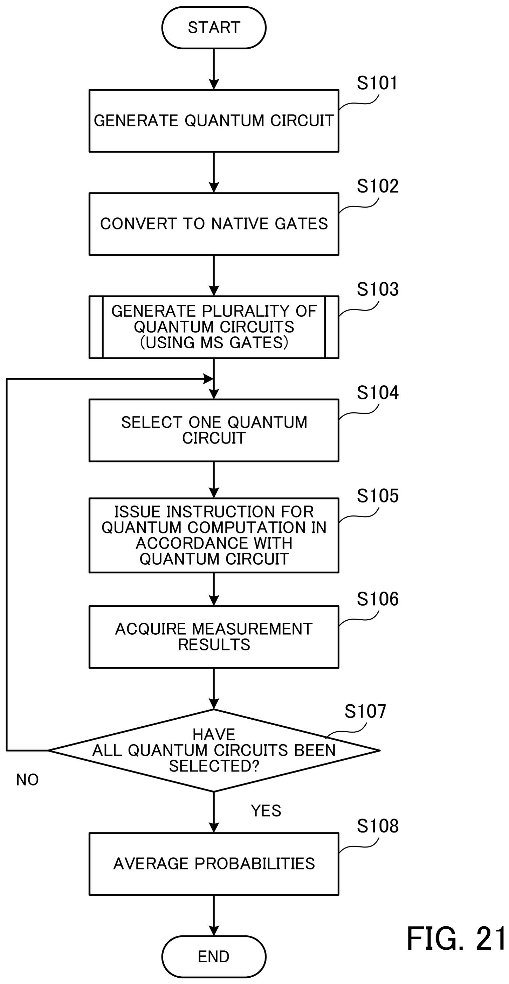

FIG. 21 is a flowchart illustrating an example of a procedure for quantum computation. The processing set forth in FIG. 21 is described below in accordance with step numbers.

[Step S101] The computation request receiving unit 110, based on a quantum computation request from any of the terminals 401, 402, and so on, generates a quantum circuit corresponding to a problem to be solved. This quantum circuit may include a three-qubit gate such as the Toffoli gate 30.

[Step S102] The quantum circuit converting unit 120 converts quantum gates in the generated quantum circuit into native gates executable by the quantum computer device 200, namely one-qubit gates or two-qubit gates.

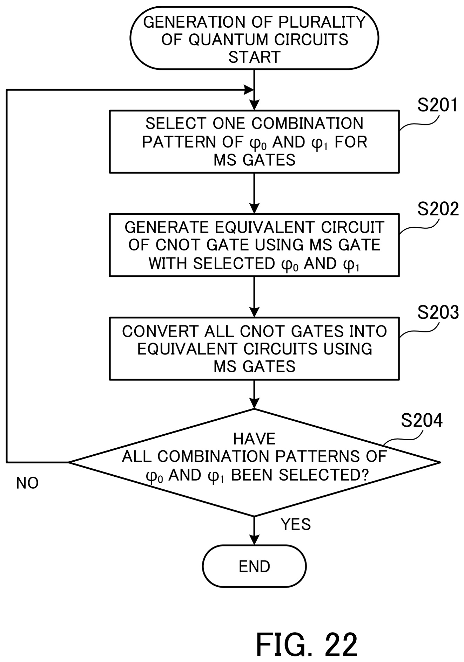

[Step S103] The quantum circuit converting unit 120, based on the quantum circuit composed of native gates, generates a plurality of quantum circuits using MS gates of different types. Details of the processing for generating the plurality of quantum circuits are described later (see FIG. 22).

[Step S104] The quantum computation controlling unit 130 selects one unselected quantum circuit from among the plurality of quantum circuits generated in step S103.

[Step S105] The quantum computation controlling unit 130, in accordance with the selected quantum circuit, instructs the quantum computer device 200 to perform gate operations or measurements.

[Step S106] The quantum computation controlling unit 130 acquires measurement results from the quantum computer device 200. The measurement results are, for each bit string representing states of a plurality of qubits, occurrence probabilities.

[Step S107] The quantum computation controlling unit 130 determines whether selection has been completed for all of the plurality of quantum circuits generated in step S103. The quantum computation controlling unit 130 proceeds to step S108 if all the quantum circuits are already selected; if any quantum circuit remains unselected, the quantum computation controlling unit 130 proceeds to step S104.

[Step S108] The output-probability averaging unit 140 averages, for each bit string representing qubit states, the probabilities obtained by the quantum computations performed for the respective quantum circuits. The output-probability averaging unit 140 then uses the averaged values as measurement results to obtain a solution to the problem to be solved. The computation request receiving unit 110 transmits the obtained solution to the terminal that issued the quantum computation request.

In this way, for each state, average values of the results (probability distributions of qubit states) obtained from the plurality of quantum circuits using MS gates of different types are output as the quantum computation result. As a consequence, errors arising in the quantum computation are reduced.

Next, details are given for processing to generate the plurality of quantum circuits using MS gates of different types.

FIG. 22 illustrates an example of a procedure for generating a plurality of quantum circuits using MS gates of different types. The processing set forth in FIG. 22 is described below in accordance with step numbers.

[Step S201] The quantum circuit converting unit 120 selects one unselected combination pattern of "$\varphi_0$" and "$\varphi_1$"

for MS gates from among a plurality of combination patterns of "$\varphi_0$" and "$\varphi_1$".

[Step S202] The quantum circuit converting unit 120 generates an equivalent circuit of a CNOT gate using an MS gate of the type corresponding to the selected combination pattern of "$\varphi_0$" and "$\varphi_1$".

[Step S203] The quantum circuit converting unit 120 converts all CNOT gates included in the quantum circuit resulting from the conversion to native gates in step S102 into the equivalent circuit generated in step S202.

[Step S204] The quantum circuit converting unit 120 determines whether selection has been completed for all of the plurality of combination patterns of "$\varphi_0$" and "$\varphi_1$" for MS gates. If any unselected combination pattern remains, the quantum circuit converting unit 120 proceeds to step S201. If all combination patterns have been selected, the quantum circuit converting unit 120 terminates the processing for generating the plurality of quantum circuits.

In this manner, a plurality of quantum circuits using MS gates of different types is generated. Because the type of MS gate differs, for the plurality of quantum circuits, the occurrence situation of errors varies according to the pair of an input state and an output state of the qubits to be operated upon. Therefore, by averaging, for each bit string indicating qubit states, the occurrence probabilities obtained by quantum computations for the respective quantum circuits, the influence of noise is likewise averaged, whereby errors are mitigated.

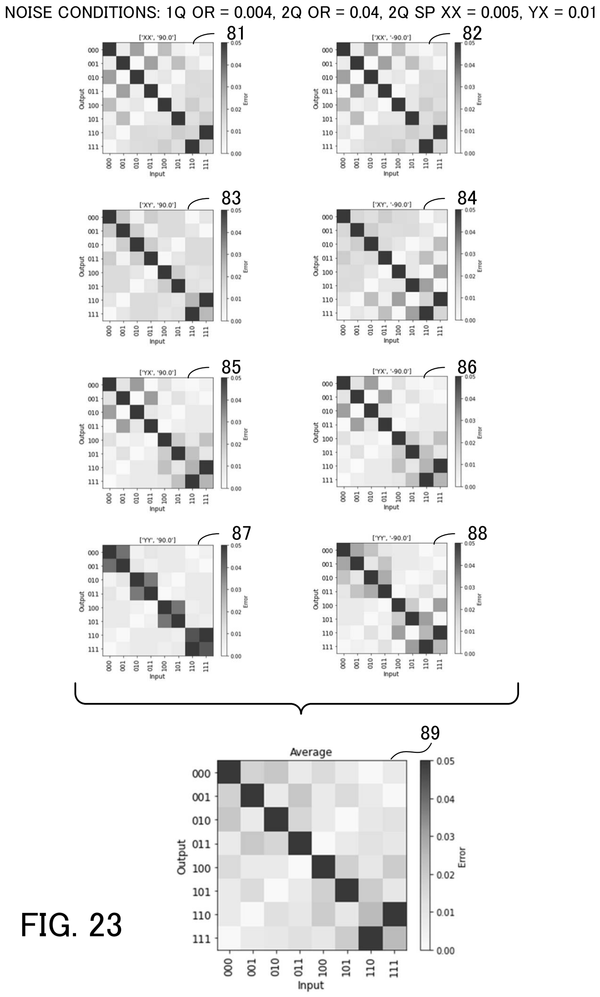

FIG. 23 illustrates an example of an error distribution of a Toffoli gate when implemented with different types of MS gates. As noise conditions, OR noise for one-qubit gates is "0.004", and OR noise for two-qubit gates is "0.04". In addition, for two-qubit gates, stochastic Pauli noise is "0.005" for 'XX' and "0.01" for "YX".

Error-value tables 81 to 88 indicate magnitudes of errors generated in quantum computation for each of eight quantum circuits that use different types of MS gates. The darker a region is, the larger the error that occurs when the input state (bit string) corresponding to that region is supplied and the corresponding output state (bit string) is obtained. IAs is apparent from a comparison of the error-value tables 81 to 88, the pattern of error occurrence differs depending on the type of MS gate; that is, which input states exhibit noise varies with the combination of "$\varphi_0$ and $\varphi_1$" of the MS gate.

An error-value table 89 indicates error values for averages of the output probabilities over the respective regions (pairs of input and output states) across the error-value tables 81 to 88. By averaging output probabilities across different types of MS gates, occurrence of worst-case errors is suppressed.

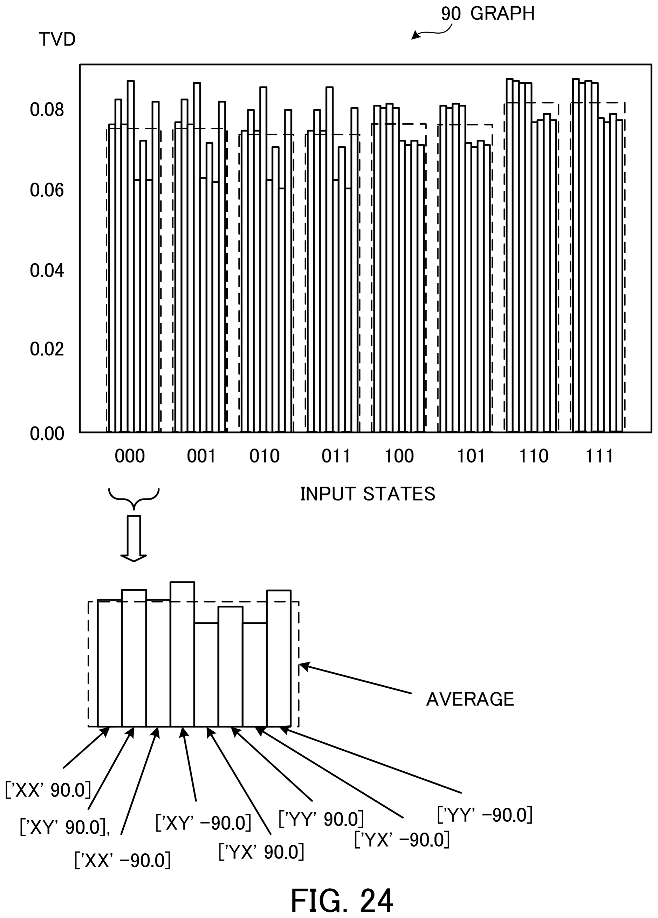

FIG. 24 illustrates an example of errors of output states for individual quantum circuits and errors of output states averaged over a plurality of quantum circuits. A graph 90 indicates, for each input state, TVD values of quantum-computation results obtained by quantum circuits using different types of MS gates.

For each input state, the bars from left to right correspond to MS gates ['XX' 90.0], ['XY' 90.0], ['XX' -90.0], ['XY' -90.0], ['YX' 90.0], ['YY' 90.0], ['YX' -90.0], and ['YY' -90.0]. The height of the enclosing dashed line indicates the TVD after averaging output probabilities of a plurality of quantum circuits using different types of MS gates.

In the example of the graph 90, when implemented with ['YX' 90.0] or ['YX' -90.0], a low TVD is obtained for any input state. However, if ideal output probabilities are not known in advance, which MS gate is optimal is unknown. By implementing with different types of MS gates and obtaining average probabilities, it becomes possible to avoid implementation of an MS gate that would yield the worst TVD. As a result, errors are mitigated.

For example, as represented in the graph 43 (see FIG. 9), the TVDs for input states "100" and "101" are about "0.08" even when RC is applied. On the other hand, when output probabilities of a plurality of quantum circuits using different types of MS gates are averaged, the TVDs for input states "100" and "101" become clearly lower than "0.08", as represented in the graph 90. That is, an error-mitigation effect is obtained.

[Third Embodiment]

A third embodiment concerns randomly determining the angles "$\varphi_0$ and $\varphi_1$" of an MS gate used in an equivalent circuit of a CNOT gate.

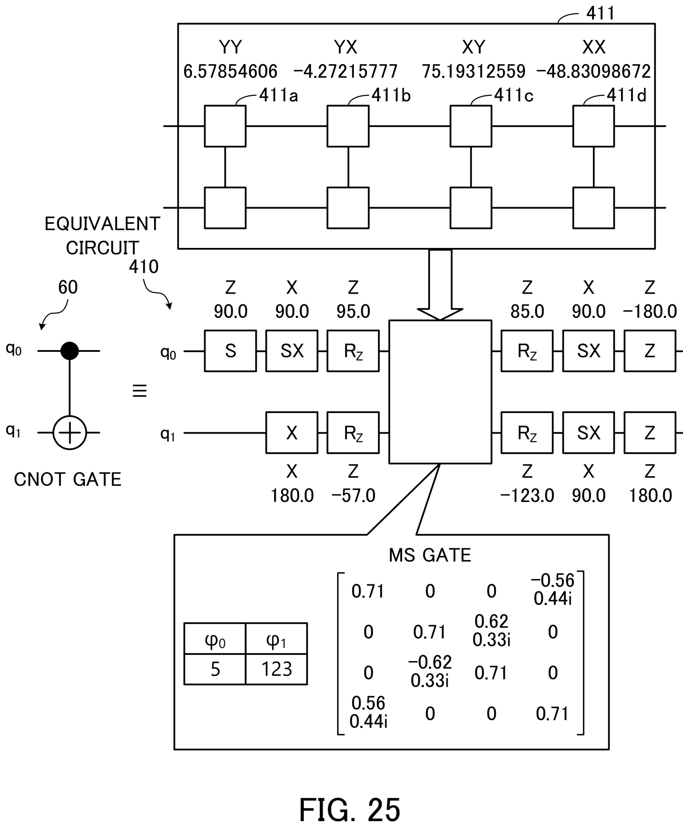

FIG. 25 illustrates a first example of an equivalent circuit of a CNOT gate in which the angles "$\varphi_0$ and $\varphi_1$" are randomly determined. An equivalent circuit 410 depicted in FIG. 25 is a quantum circuit that is equivalent to the CNOT gate 60 and uses an MS gate 411 with "$\varphi_0 = 5°$ and $\varphi_1 = 123°$".

In the equivalent circuit 410, on qubit "$q_0$", an S gate (a rotation of "90.0°" about the Z axis) and an SX gate (a rotation of "90.0°" about the X axis) are arranged, and on qubit "$q_1$" an X gate (a rotation of "180.0°" about the X axis) is arranged. Next, on each of the qubits "$q_0$ and $q_1$" an RZ gate with different angles (a rotation of "95.0°" about the Z axis and a rotation of "-57.0°" about the Z axis) is arranged. Thereafter, an MS gate 411 with $\varphi_0 = 5°$ and $\varphi_1 = 123°$ is arranged for the qubits "$q_0$ and $q_1$". A gate operation of this MS gate 411 is represented by Expression (12).

$$\begin{bmatrix} 0.71 & 0 & 0 & -0.56 \\ & & & 0.44i \\ 0 & 0.71 & 0.62 & 0 \\ & & 0.33i & \\ 0 & -0.62 & 0.71 & 0 \\ & 0.33i & & \\ 0.56 & 0 & 0 & 0.71 \\ 0.44i & & & \end{bmatrix} \qquad (12)$$

The MS gate 411 is executed by decomposing it into four other MS gates 411a to 411d. The MS gate 411a is "'YY" 6.57854606", the MS gate 411b is "'YX' -4.27215777", the MS gate 411c is "'XY' 75.19312559", and the MS gate 411d is "'XX' -48.83098672".

After the MS gate 411, on qubit "$q_0$", an $R_Z$ gate (a rotation of "85.0°" about the Z axis) is arranged, and on qubit "$q_1$" an $R_Z$ gate (a rotation of "-123.0°" about the Z axis) is arranged. Next, on each of the qubits "$q_0$ and $q_1$", an SX gate (a rotation of "90.0°" about the X axis) is arranged, then on qubit "$q_0$", a Z gate (a rotation of "-180.0°" about the Z axis) is arranged, and on qubit "$q_1$", a Z gate (a rotation of "180.0°" about the Z axis) is arranged.

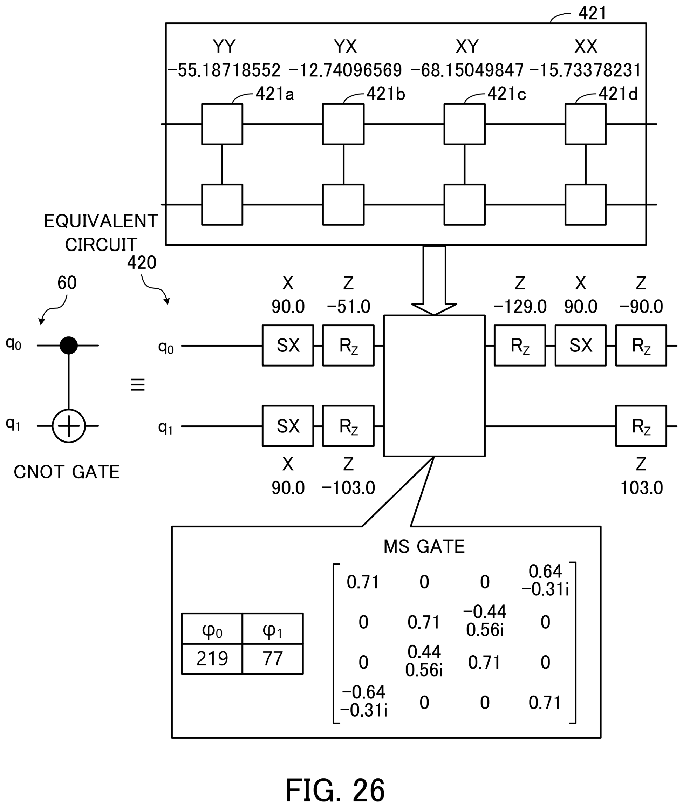

FIG. 26 illustrates a second example of an equivalent circuit of a CNOT gate in which the angles "$\varphi_0$ and $\varphi_1$" are randomly determined. An equivalent circuit 420 depicted in FIG. 26 is a quantum circuit that is equivalent to the CNOT gate 60 and uses an MS gate 421 with "$\varphi_0 = 219°$ and $\varphi_1 = 77°$".

In the equivalent circuit 420, on each of the qubits "$q_0$ and $q_1$", an SX gate (a rotation of "90.0°" about the X axis) is arranged. Next, $R_Z$ gates with different rotation angles are arranged on the qubits "$q_0$ and $q_1$", respectively (a rotation of "-51.0°" about the Z axis and a rotation of "-103.0°" about the Z axis). Thereafter, the MS gate 421 with "$\varphi_0 = 219°$ and $\varphi_1 = 77°$" is arranged for the qubits "$q_0$ and $q_1$". A gate operation of the MS gate 421 is represented by Expression (13).

$$\begin{bmatrix} 0.71 & 0 & 0 & 0.64 \\ & & & -0.31i \\ 0 & 0.71 & -0.44 & 0 \\ & & 0.56i & \\ 0 & 0.44 & 0.71 & 0 \\ & 0.56i & & \\ -0.64 & 0 & 0 & 0.71 \\ -0.31i & & & \end{bmatrix} \qquad (13)$$

The MS gate 421 is executed by decomposing it into four other MS gates 421a to 421d. The MS gate 421a is "'YY' -55.18718552", the MS gate 421b is "'YX' -12.74096569", the MS gate 421c is "'XY' -68.15049847", and the MS gate 421d is "'XX' -15.73378231".

After the MS gate 411, on the qubit "$q_0$", an $R_Z$ gate (a rotation of "-129.0°" about the Z axis) and an SX gate (a rotation of "90.0°" about the X axis) are arranged. Next, $R_Z$ gates with different angles are arranged on the qubits "$q_0$ and $q_1$", respectively (a rotation of "-90.0°" about the Z axis and a rotation of "103.0°" about the Z axis).

As illustrated in FIGS. 25 and 26, an MS gate with an angle randomly determined from the range "0° to 360°" is executable by combining a plurality of MS gates. In the third embodiment, the quantum computation system 300 mitigates occurring errors by averaging results of quantum computation based on a plurality of quantum circuits that use MS gates with randomly determined angles.

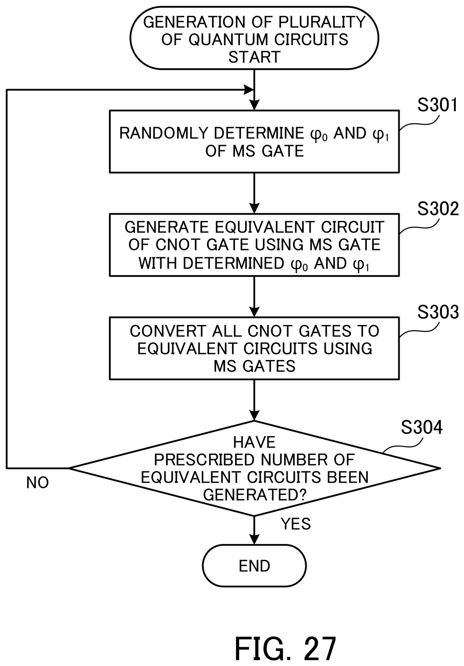

FIG. 27 is a flowchart illustrating one example of a procedure for generating a plurality of quantum circuits using MS gates with random angles. The processing depicted in FIG. 27 is described below in accordance with step numbers.

[Step S301] The quantum-circuit converting unit 120 randomly determines the angle parameters "$\varphi_0$ and $\varphi_1$" of the MS gate.

[Step S302] The quantum-circuit converting unit 120 generates an equivalent circuit of a CNOT gate using an MS gate with the determined "$\varphi_0$ and $\varphi_1$".

[Step S303] The quantum-circuit converting unit 120 converts all CNOT gates in the quantum circuit corresponding to the problem to be solved into the equivalent circuit generated in step S302.

[Step S304] The quantum-circuit converting unit 120 determines whether a prescribed number of equivalent circuits has been generated. If generation of the prescribed number of equivalent circuits is completed, the quantum circuit converting unit 120 ends the processing of generating the plurality of quantum circuits; if the number of generated equivalent circuits is smaller than the prescribed number, the quantum circuit converting unit 120 proceeds to step S301.

In this way, a plurality of quantum circuits using MS gates with randomly determined angles is generated. By averaging computation results of quantum computation using each of these quantum circuits and adopting the averaged result as a final computation result, occurrence of unpredictable large errors is suppressed.

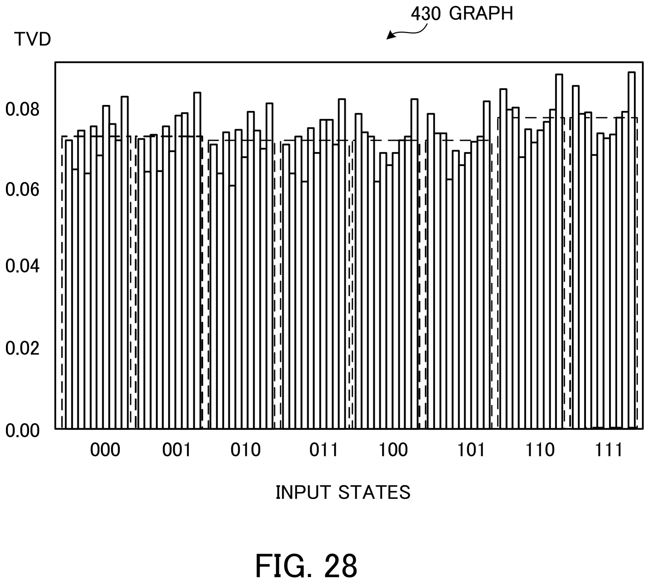

FIG. 28 illustrates an example of errors in output states of individual quantum circuits and errors in output states averaged over a plurality of quantum circuits. A graph 430 presents, as bar heights for each input state, TVD values of quantum-computation results obtained by ten quantum circuits using MS gates with randomly determined angles. A broken-line height around the bars indicates the average of the TVD values of a plurality of quantum circuits using MS gates of different types.

As illustrated in the graph 430, by obtaining an average probability of computation results of a plurality of quantum circuits using MS gates with randomly determined angles, it is possible to avoid implementing an MS gate for which the TVD is the worst. Consequently, occurring errors are mitigated.

[Other Embodiments]

In the second and third embodiments, examples using an ion-trap quantum computer are presented; however, any quantum computer may be used as long as it is capable of executing MS-gate operations as native gates, even if it is a quantum computer of another type.

The foregoing merely illustrates the principles of the present invention. Numerous modifications and changes are possible to those skilled in the art, and the invention is not limited to the exact configurations and applications set forth and described above. All corresponding modifications and equivalents are deemed to fall within the scope of the invention as defined by the appended claims and equivalents thereof.

Reference Signs List

| | |
|---|---|
| 1 | first quantum circuit |
| 1a-1f | two-qubit gate |
| 2a, 2b, and so on | equivalent circuit |
| 3a, 3b and so on | MS gate |
| 4a, 4b, and so on | second quantum circuit |
| 10 | information processing apparatus |
| 11 | storing unit |
| 12 | processing unit |

**Claims**

1. A quantum computation program that causes a computer to execute a process comprising:

   obtaining a plurality of equivalent circuits, the plurality of equivalent circuits being equivalent to a two-qubit gate included in a first quantum circuit and being generated using respective ones of a plurality of Mølmer-Sørenson (MS) gates whose parameter values differ;
   generating a plurality of second quantum circuits by converting the two-qubit gate included in the first quantum circuit into each of the plurality of equivalent circuits;
   causing a quantum computer to execute quantum computations respectively in accordance with the plurality of second quantum circuits generated; and
   outputting, as a computation result of the first quantum circuit, a value obtained by averaging results of the quantum computations executed by the quantum computer in accordance with the plurality of second quantum circuits.

2. The quantum computation program according to claim 1, wherein:
   the generating of the plurality of second quantum circuits includes, when the two-qubit gate included in the first quantum circuit includes a plurality of two-qubit gates of the same type, generating the plurality of second quantum circuits, in which, for each of the plurality of second quantum circuits, each of the plurality of two-qubit gates is converted into the same one of the plurality of equivalent circuits.

3. The quantum computation program according to claim 1, wherein:
the generating of the plurality of equivalent circuits includes designating, as two or more target candidate-value sequences, candidate-value sequences generable by selecting two times, with duplication allowed, from among a plurality of candidate values that are boundary angles obtained by dividing 360° into n, where n is an integer of 2 or greater, and generating, for each of the two or more target candidate-value sequences, the plurality of equivalent circuits using one of the plurality of MS gates, in which a first candidate value and a second candidate value indicated by the target candidate-value sequence are respectively set as a value of a first parameter and a value of a second parameter.

4. The quantum computation program according to claim 3, wherein:
the generating of the plurality of equivalent circuits includes, among the candidate-value sequences generable, designating, as one of the two or more target candidate-value sequences, one of two candidate-value sequences in which, for each of the two candidate-value sequences, an angle obtained by adding the first candidate value and the second candidate value included in the candidate-value sequence and an angle obtained by subtracting the second candidate value from the first candidate value included in the candidate-value sequence are both equal between the two candidate-value sequences.

5. The quantum computation program according to claim 1, wherein:
the generating of the plurality of equivalent circuits includes randomly generating angles within a range from 0° to 360°, and generating the plurality of equivalent circuits using the respective ones of the plurality of MS gates in which the randomly generated angles are used as the parameter values.

6. A quantum computation method executed by a computer, the quantum computation method comprising:

obtaining a plurality of equivalent circuits, the plurality of equivalent circuits being equivalent to a two-qubit gate included in a first quantum circuit and being generated using respective ones of a plurality of Mølmer-Sørensen (MS) gates whose parameter values differ;
generating a plurality of second quantum circuits by converting the two-qubit gate included in the first quantum circuit into each of the plurality of equivalent circuits;
causing a quantum computer to execute quantum computations respectively in accordance with the plurality of second quantum circuits generated; and
outputting, as a computation result of the first quantum circuit, a value obtained by averaging results of the quantum computations executed by the quantum computer in accordance with the plurality of second quantum circuits.

7. An information processing apparatus comprising:
a processing unit for:

obtaining a plurality of equivalent circuits, the plurality of equivalent circuits being equivalent to a two-qubit gate included in a first quantum circuit and being generated using respective ones of a plurality of Mølmer-Sørensen (MS) gates whose parameter values differ,
generating a plurality of second quantum circuits by converting the two-qubit gate included in the first quantum circuit into each of the plurality of equivalent circuits,
causing a quantum computer to execute quantum computations respectively in accordance with the plurality of second quantum circuits generated, and
outputting, as a computation result of the first quantum circuit, a value obtained by averaging results of the quantum computations executed by the quantum computer in accordance with the plurality of second quantum circuits.

FIG. 1

TERMINAL
401

TERMINAL
402

. . .

20

NETWORK

300

QUANTUM
COMPUTATION SYSTEM

200

100

QUANTUM
COMPUTER DEVICE

CLASSICAL
COMPUTER DEVICE

FIG. 2

FIG. 3

CLASSICAL COMPUTER DEVICE
100

101

**CPU**

104

**GPU**

21 MONITOR

22 KEYBOARD

102

**RAM**

105

**INPUT INTERFACE**

23 MOUSE

103

**HDD**

106

**OPTICAL DRIVE DEVICE**

24 OPTICAL DISC

107

**DEVICE CONNECTION INTERFACE**

25 MEMORY DEVICE

109

**NETWORK INTERFACE**

100a BUS

108

**DEVICE CONNECTION INTERFACE**

26 MEMORY READER-WRITER

27 MEMORY CARD

20

**NETWORK**

200

**QUANTUM COMPUTER DEVICE**

# FIG. 4

FIG. 5

FIG. 6

FIG. 7

・OVER-ROTATION (OR) NOISE ONLY
NOISE CONDITIONS : 1Q OR = 0.004, 2Q OR = 0.04

35 ERROR VALUE TABLE

36 ERROR VALUE TABLE

37 GRAPH

TVD

FIG. 8

·OVER–ROTATION (OR) NOISE + STOCHASTIC PAULI (SP) NOISE
NOISE CONDITIONS: 1Q OR = 0.004, 2Q OR = 0.04, 2Q SP XX = 0.005, YX = 0.01

FIG. 9

TERMINAL
401

TERMINAL
402

. . .

100 CLASSICAL COMPUTER DEVICE

110
COMPUTATION
REQUEST
RECEIVING
UNIT

140
OUTPUT-
PROBABILITY
AVERAGING
UNIT

120
QUANTUM
CIRCUIT
CONVERTING
UNIT

130
QUANTUM
COMPUTATION
CONTROLLING
UNIT

200
QUANTUM COMPUTER DEVICE

FIG. 10

$$n^2/2 \text{ GATES } (n = 4)$$

51 MS-GATE TYPE LIST

| $\varphi_0$ | $\varphi_1$ | TYPE OF MS GATE |
|---|---|---|
| 0 | 0 | 'XX', 90.0 |
| 0 | 90 | 'YX', 90.0 |
| 0 | 180 | 'XX', -90.0 |
| 0 | 270 | 'YX', -90.0 |
| 90 | 0 | 'XY', 90.0 |
| 90 | 90 | 'YY', 90.0 |
| 90 | 180 | 'XY', -90.0 |
| 90 | 270 | 'YY', -90.0 |

=

52 MS-GATE TYPE LIST

| $\varphi_0$ | $\varphi_1$ | TYPE OF MS GATE |
|---|---|---|
| 180 | 0 | 'XX', -90.0 |
| 180 | 90 | 'YX', -90.0 |
| 180 | 180 | 'XX', 90.0 |
| 180 | 270 | 'YX', 90.0 |
| 270 | 0 | 'XY', -90.0 |
| 270 | 90 | 'YY', -90.0 |
| 270 | 180 | 'XY', 90.0 |
| 270 | 270 | 'YY', 90.0 |

## FIG. 11

61 EQUIVALENT CIRCUIT

61a

60

CNOT GATE

$\equiv$

| | Z 90.0 | X 90.0 | Z −90.0 | XX 90.0 | Z −90.0 | X 90.0 | Z −180.0 |
|---|---|---|---|---|---|---|---|
| $q_0$ | S | SX | $R_Z$ | | $R_Z$ | SX | Z |

$q_1$ — SX

X 90.0

MS GATE

| $\varphi_0$ | $\varphi_1$ |
|---|---|
| 0 | 0 |

$$\begin{bmatrix} 0.71 & 0 & 0 & -0.71i \\ 0 & 0.71 & -0.71i & 0 \\ 0 & -0.71i & 0.71 & 0 \\ -0.71i & 0 & 0 & 0.71 \end{bmatrix}$$

FIG. 12

**62 EQUIVALENT CIRCUIT**

62a

MS GATE

| $\varphi_0$ | $\varphi_1$ |
|---|---|
| 0 | 90 |

$$\begin{bmatrix} 0.71 & 0 & 0 & -0.71 \\ 0 & 0.71 & -0.71 & 0 \\ 0 & 0.71 & 0.71 & 0 \\ 0.71 & 0 & 0 & 0.71 \end{bmatrix}$$

## FIG. 13

63 EQUIVALENT CIRCUIT

63a

FIG. 14

FIG. 15

65 EQUIVALENT CIRCUIT

65a

60

CNOT GATE

≡

$q_0$

| Z | X | Z | XY | Z | X |
|---|---|---|---|---|---|
| −90.0 | 90.0 | −90.0 | 90.0 | −90.0 | 90.0 |

$q_0$ — $R_Z$ — SX — $R_Z$ — [ ] — $R_Z$ — SX —

$q_1$ — X — S — [ ] — S — SX — Z —

| X | Z | Z | X | Z |
|---|---|---|---|---|
| 180.0 | 90.0 | 90.0 | 90.0 | 180.0 |

MS GATE

| $\varphi_0$ | $\varphi_1$ |
|---|---|
| 90 | 0 |

$$\begin{bmatrix} 0.71 & 0 & 0 & -0.71 \\ 0 & 0.71 & 0.71 & 0 \\ 0 & -0.71 & 0.71 & 0 \\ 0.71 & 0 & 0 & 0.71 \end{bmatrix}$$

FIG. 16

FIG. 17

FIG. 18

68  EQUIVALENT CIRCUIT

68a

| | X 90.0 | YY −90.0 | Z −180.0 | X 90.0 | Z −90.0 |

60

q0 ●

≡

q1 ⊕

CNOT GATE

q0 — SX — [ ] — Z — SX — Rz —

q1 — Z — SX — S — [ ] — X — Rz —

Z 180.0 · X 90.0 · Z 90.0 · X 180.0 · Z −90.0

MS GATE

| $\varphi_0$ | $\varphi_1$ |
|---|---|
| 90 | 270 |

$$\begin{bmatrix} 0.71 & 0 & 0 & -0.71i \\ 0 & 0.71 & 0.71i & 0 \\ 0 & 0.71i & 0.71 & 0 \\ -0.71i & 0 & 0 & 0.71 \end{bmatrix}$$

FIG. 19

FIG. 20

START

GENERATE QUANTUM CIRCUIT — S101

CONVERT TO NATIVE GATES — S102

GENERATE PLURALITY OF QUANTUM CIRCUITS (USING MS GATES) — S103

SELECT ONE QUANTUM CIRCUIT — S104

ISSUE INSTRUCTION FOR QUANTUM COMPUTATION IN ACCORDANCE WITH QUANTUM CIRCUIT — S105

ACQUIRE MEASUREMENT RESULTS — S106

HAVE ALL QUANTUM CIRCUITS BEEN SELECTED? — S107

NO

YES

AVERAGE PROBABILITIES — S108

END

FIG. 21

GENERATION OF PLURALITY
OF QUANTUM CIRCUITS
START

SELECT ONE COMBINATION
PATTERN OF $\varphi_0$ AND $\varphi_1$ FOR
MS GATES — S201

GENERATE EQUIVALENT CIRCUIT
OF CNOT GATE USING MS GATE
WITH SELECTED $\varphi_0$ AND $\varphi_1$ — S202

CONVERT ALL CNOT GATES INTO
EQUIVALENT CIRCUITS USING
MS GATES — S203

HAVE
ALL COMBINATION PATTERNS OF
$\varphi_0$ AND $\varphi_1$ BEEN SELECTED? — S204

NO

YES

END

FIG. 22

NOISE CONDITIONS: 1Q OR = 0.004, 2Q OR = 0.04, 2Q SP XX = 0.005, YX = 0.01

FIG. 23

90 GRAPH

TVD

INPUT STATES

000    001    010    011    100    101    110    111

AVERAGE

['XX' 90.0]]

['XY' 90.0], ['XX' −90.0]

['XY' −90.0]

['YX' 90.0]

['YY' 90.0]

['YX' −90.0]

['YY' −90.0]

FIG. 24

411

| YY | YX | XY | XX |
|---|---|---|---|
| 6.57854606 | −4.27215777 | 75.19312559 | −48.83098672 |

411a   411b   411c   411d

EQUIVALENT
CIRCUIT
410

60

$q_0$ ●

≡

$q_1$ ⊕

CNOT GATE

| | Z | X | Z | | Z | X | Z |
| | 90.0 | 90.0 | 95.0 | | 85.0 | 90.0 | −180.0 |
| $q_0$ | S | SX | $R_Z$ | | $R_Z$ | SX | Z |

| $q_1$ | | X | $R_Z$ | | $R_Z$ | SX | Z |
| | | X | Z | | Z | X | Z |
| | | 180.0 | −57.0 | | −123.0 | 90.0 | 180.0 |

MS GATE

| $\varphi_0$ | $\varphi_1$ |
|---|---|
| 5 | 123 |

$$\begin{bmatrix} 0.71 & 0 & 0 & -0.56 \\ & & & 0.44i \\ 0 & 0.71 & 0.62 & 0 \\ & & 0.33i & \\ 0 & -0.62 & 0.71 & 0 \\ & 0.33i & & \\ 0.56 & 0 & 0 & 0.71 \\ 0.44i & & & \end{bmatrix}$$

# FIG. 25

FIG. 26

FIG. 27

FIG. 28

## INTERNATIONAL SEARCH REPORT

| International application No. |
|---|
| **PCT/JP2023/024673** |

**A. CLASSIFICATION OF SUBJECT MATTER**

*G06N 10/70*(2022.01)i
FI: G06N10/70

According to International Patent Classification (IPC) or to both national classification and IPC

**B. FIELDS SEARCHED**

Minimum documentation searched (classification system followed by classification symbols)

G06N10/00-10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2017/0308803 A1 (WALLMAN, J. J.) 26 October 2017 (2017-10-26) paragraphs [0024]-[0061] | 1-2, 5-7 |
| A | | 3-4 |
| Y | US 2019/0205783 A1 (UNIV MARYLAND) 04 July 2019 (2019-07-04) paragraphs [0045]-[0104], fig. 2 | 1-2, 5-7 |
| A | | 3-4 |
| A | JP 2022-510394 A (IONQ INC.) 26 January 2022 (2022-01-26) entire text, all drawings | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/024673**

| Patent document cited in search report | | | Publication date (day/month/year) | Patent family member(s) | | | Publication date (day/month/year) |
|---|---|---|---|---|---|---|---|
| US | 2017/0308803 | A1 | 26 October 2017 | US 2019/0018721 A1 paragraphs [0046]-[0083] | | | |
| US | 2019/0205783 | A1 | 04 July 2019 | (Family: none) | | | |
| JP | 2022-510394 | A | 26 January 2022 | US 2020/0184024 A1 entire text, all drawings WO 2020/117552 A1 CN 113168584 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AKEL HASHIM** ; **RAVI K. NAIK** ; **ALEXIS MORVAN** ; **JEAN-LOUP VILLE** ; **BRADLEY MITCHELL** ; **JOHN MARK KREIKEBAUM** ; **MARC DAVIS** ; **ETHAN SMITH** ; **COSTIN IANCU** ; **KEVIN P. O'BRIEN**. Randomized compiling for scalable quantum computing on a noisy superconducting quantum processor. *arXiv:2010.00215v2*, 12 May 2021